# EUROPÄISCHE PATENTANMELDUNG

(11) **EP 4 166 483 A1**
(43) Veröffentlichungstag der Anmeldung: **19.04.2023**
(21) Anmeldenummer: 22190760.3
(22) Anmeldetag: 17.08.2022
(51) Int. Cl.: B65G 21/20, B65G 43/08

(54) **VERFAHREN ZUM SENSORISCHEN ERKENNEN VON ARTIKELN UND TRANSPORTABSCHNITT FÜR ARTIKEL WIE GETRÄNKEBEHÄLTER ODER DERGLEICHEN**

(30) Priorität: 12.10.2021 DE 102021126407
(71) Anmelder: KRONES Aktiengesellschaft, 93073 Neutraubling (DE)
(72) Erfinder: HARTL, Michael, 93073 Neutraubling (DE); LEHNER, Thomas, 93073 Neutraubling (DE)
(74) Vertreter: Benninger, Johannes

(57) **Zusammenfassung**

Es ist ein Verfahren zum sensorischen Erkennen von Artikeln offenbart. Bei dem Verfahren wird eine Vielzahl an Artikeln über eine Transportvorrichtung (20) in wenigstens einer Gasse (G) gefördert. Im Rahmen der Förderung versetzen Artikel nacheinander mindestens ein im Bereich der Gasse (G) angeordnetes Kontaktelement (15, 15'), welches mindestens eine Kontaktelement (15, 15') über eine Verstellmechanik (30, 30') an wenigstens einer vorgegebenen Befestigungsposition (BP, BP') einer Stütze (35) gelagert ist. Aus dem jeweiligen Versatz des mindestens einen Kontaktelementes (15, 15') resultierend wird wenigstens ein Sensor (40, 40') betätigt. Das mindestens eine Kontaktelement (15, 15') wird über die Verstellmechanik (30, 30') bei einem jeweiligen Versatz mit einer Richtungskomponente geführt, entlang welcher Richtungskomponente die Vielzahl an Artikeln über die Transportvorrichtung (20) in der Gasse (G) gefördert wird.

## Beschreibung

Die vorliegende Erfindung betrifft ein Verfahren zum sensorischen Erkennen von Artikeln und einen Transportabschnitt für Artikel wie Getränkebehälter oder dergleichen.

Im technischen Bereich der Pack- und Palettiertechnik ist es üblich, Artikel über Transportvorrichtungen zu führen, um sie mittels der Transportvorrichtungen in Richtung einer jeweiligen Bearbeitung bzw. Handhabung zu bewegen. Um erkennen zu können, ob sich ein jeweiliger Artikel an einer vorgesehenen Soll-Position befindet, werden im Stand der Technik bereits Sensoren im Bereich einer jeweiligen Transportvorrichtung angeordnet, welche die Anwesenheit oder Abwesenheit eines jeweiligen Artikels detektieren können. Nachdem ein jeweiliger Artikel erkannt wurde, kann es sein, dass sodann eine Fördergeschwindigkeit der Transportvorrichtung angepasst wird, um den jeweiligen Artikel zu einem bestimmten Zeitpunkt einer nachfolgenden Bearbeitung zuzuführen. Die jeweiligen Informationen zur Anwesenheit oder Abwesenheit eines jeweiligen Artikels zu einem bestimmten Zeitpunkt können hierzu mittels Sensoren an eine Steuer- und/oder Regeleinrichtung übertragen werden, welche auf Grundlage dieser Informationen auch weitere Prozesse zur Handhabung bzw. zur Einteilung und/oder Verpackung der jeweiligen Artikel steuert.

Eine Transportstrecke, welche bereits über einen solchen Sensor verfügt, ist beispielsweise aus der deutschen Patentanmeldung mit der Veröffentlichungsnummer DE 10 2010 000 596 A1 bekannt. Die in dieser Patentanmeldung offenbarte Transportstrecke umfasst ein Förderband mit einem Geländer und eine Sensoreinrichtung, die lösbar an einer Rückseite des Geländers angebracht ist. Ein Bügel der Sensoreinrichtung ragt in die Transportstrecke hinein. Treten Artikel mit dem Bügel in Kontakt, so wird der jeweilige Bügel in Richtung nach hinten geschwenkt und die Sensoreinrichtung betätigt. Die über die Sensoreinrichtung bereitgestellten Informationen können sodann von einer Steuereinrichtung ausgewertet werden.

Eine weitere Transportstrecke, welche bereits über eine entsprechende Sensorik verfügt, ist zudem aus der WO 2017/141066 A2 bekannt. Entsprechend der in der WO-Anmeldung offenbarten Lehre wird ein L-förmiger Winkel an einer Führungsschiene angeordnet. Der L-förmige Winkel trägt ein Pendel, das um eine horizontal orientierte Achse geschwenkt wird, wenn Produkte mit dem Pendel in Kontakt treten. Über einen Sensor wird die Position des Pendels erfasst. Das Pendel verfügt über ein Kontaktelement, welches eine aus Kunststoff gebildete Oberfläche besitzt. Die Lagerung der Sensorik erfolgt wiederum an einer Führungsschiene, wobei die wesentlichen Komponenten, welche die Sensorik tragen, sich im Bereich einer Rückseite der Führungsschiene befinden.

Bei solchen aus dem Stand der Technik bekannten Mechanismen besitzt die gesamte Transportstrecke einen Aufbau mit großer Dimensionierung, da jeweils eine entsprechend große Haltestruktur zum Lagern der Sensorik an einer Führungsschiene befestigt werden muss. Hierdurch muss die relative Beabstandung von benachbarten Führungsschienen entsprechend groß gehalten werden, da sich zwischen benachbarten Führungsschienen jeweils eine Halterung für die Sensorik befindet. Zudem besitzt die gesamte Mechanik, welche zur Bewegung eines Betätigungsmechanismus vorgesehen ist, einen komplexen Aufbau.

Wünschenswert wären Möglichkeiten, mit welcher Artikel mit geringem Raumbedarf transportiert und sensorisch erfasst werden können. Eine entsprechende Transportstrecke soll zudem einfach aufgebaut sein und ein entsprechendes Verfahren einfach umgesetzt werden können.

Diese Aufgabe wird mit den Gegenständen gelöst, welche die Merkmale in den unabhängigen Ansprüchen umfassen. Weitere vorteilhafte Ausgestaltungen werden durch die Unteransprüche beschrieben.

Die Erfindung betrifft einen Transportabschnitt für Artikel wie Getränkebehälter oder dergleichen. Der Transportabschnitt kann demnach zur Förderung von Getränkeflaschen und/oder von Getränkedosen ausgebildet sein. Der Transportabschnitt kann derart ausgebildet sein, dass der Transportabschnitt Artikel wie Getränkebehälter oder dergleichen einer weiteren Handhabung und hierbei insbesondere einer als Bestandteil einer Verpackungsvorrichtung ausgebildeten Arbeitsstation zuführen kann.

Dem Transportabschnitt kann eine Einteileinrichtung zur Beabstandung von Artikeln vorgeordnet sein, so dass Artikel den Transportabschnitt bereits mit einer über die Einteileinrichtung hergestellten relativen Beabstandung zueinander erreichen.

Der Transportabschnitt umfasst eine Transportvorrichtung mit mindestens einem Führungselement, unter Zuhilfenahme welchen mindestens einen Führungselementes wenigstens eine Gasse gebildet ist, in welcher wenigstens einen Gasse eine Vielzahl an Artikeln über die Transportvorrichtung förderbar ist.

Beispielsweise kann es sein, dass das mindestens eine Führungselement zusammen mit einer seitlichen Begrenzung der Transportvorrichtung eine Gasse ausbildet. Denkbar ist auch, dass jeweils zwei Führungselemente miteinander eine Gasse ausbilden, in welcher jeweiligen Gasse eine Vielzahl an Artikeln über die Transportvorrichtung förderbar ist.

Die Transportvorrichtung kann mindestens ein umlaufend angetriebenes Transportband und/oder mindestens eine umlaufend angetriebene Mattenkette besitzen. Auf dem mindestens einen umlaufend angetriebenen Transportband und/oder auf der mindestens einen umlaufend angetriebenen Mattenkette können Artikel wie Getränkebehälter oder dergleichen ggf. aufstehen und durch einen umlaufenden Antrieb des mindestens einen Transportbandes bzw. der mindestens einen Mattenkette fortbewegt werden.

Weiter umfasst der Transportabschnitt mindestens ein Kontaktelement, eine Verstellmechanik, wenigstens eine Stütze und wenigstens einen Sensor, wobei das mindestens eine Kontaktelement über die Verstellmechanik an wenigstens einer vorgegebenen Befestigungsposition der wenigstens einen Stütze gelagert ist und über in der wenigstens einen Gasse bewegte Artikel aus einer Warteposition, in welcher das mindestens eine Kontaktelement zumindest abschnittsweise in die wenigstens eine Gasse hineinragt, in eine Arbeitsposition, bei welcher der wenigstens eine Sensor betätigt ist, versetzt werden kann.

Die wenigstens eine Stütze kann durch das mindestens eine Führungselement ausgebildet sein, unter Zuhilfenahme welchen mindestens einen Führungselementes wenigstens eine Gasse gebildet ist, in welcher wenigstens einen Gasse eine Vielzahl an Artikeln über die Transportvorrichtung förderbar ist. Bewährt hat es sich beispielsweise, wenn das mindestens eine Führungselement die wenigstens eine Stütze ausbildet, wobei die wenigstens eine Stütze zudem als wenigstens eine Befestigungsplatte ausgebildet sein kann. Hierbei kann es sein, dass das mindestens eine Kontaktelement über die Verstellmechanik an wenigstens einer vorgegebenen Befestigungsposition der Befestigungsplatte gelagert ist und über in der wenigstens einen Gasse bewegte Artikel aus einer Warteposition, in welcher das mindestens eine Kontaktelement zumindest abschnittsweise in die wenigstens eine Gasse hineinragt, in eine Arbeitsposition, in welcher der wenigstens eine Sensor betätigt ist, versetzt werden kann.

Das mindestens eine Kontaktelement kann sich in einer Förderrichtung der Transportvorrichtung und/oder entgegen einer Förderrichtung der Transportvorrichtung verjüngen bzw. spitz zulaufen. Hierdurch wird das Risiko sehr gering gehalten, dass Artikel durch eine Berührung des mindestens einen Kontaktelementes beschädigt werden. Weiter kann das mindestens eine Kontaktelement beispielsweise durch Kunststoff ausgebildet sein.

Das mindestens eine Kontaktelement ist über die Verstellmechanik derart geführt, dass das mindestens eine Kontaktelement bei einem jeweiligen Versatz seinen relativen Abstand gegenüber der wenigstens einen Befestigungsposition verändert. Alternativ oder ergänzend hierzu kann es sein, dass die Verstellmechanik zum Führen des mindestens einen Kontaktelementes bei einem jeweiligen Versatz mit einer Richtungskomponente ausgebildet ist, welche Richtungskomponente einer Förderrichtung der Transportvorrichtung entspricht. Durch eine solche Lagerung des mindestens einen Kontaktelementes kann der gesamte Aufbau des Transportabschnittes sehr kompakt gehalten werden.

Bewährt haben sich Ausführungsformen, bei welchen die Verstellmechanik zum Führen des mindestens einen Kontaktelementes bei einem jeweiligen Versatz mit einer ersten Richtungskomponente ausgebildet ist, wobei diese erste Richtungskomponente einer Förderrichtung der Transportvorrichtung entspricht. Außerdem haben sich Ausführungsformen bewährt, bei denen die Verstellmechanik zum Führen des mindestens einen Kontaktelementes bei einem jeweiligen Versatz mit einer weiteren zweiten Richtungskomponente ausgebildet ist, welche weitere zweite Richtungskomponente senkrecht zu einer Förderrichtung der Transportvorrichtung orientiert ist.

Es kann sein, dass die Verstellmechanik zum Führen des mindestens einen Kontaktelementes bei einem jeweiligen Versatz schräg zur Förderrichtung der Transportvorrichtung ausgebildet ist. Insbesondere kann es hierbei sein, dass die Verstellmechanik zum Führen des mindestens einen Kontaktelementes bei einem jeweiligen Versatz entlang einer Bewegungsrichtung ausgebildet ist, welche schräg und zumindest näherungsweise geradlinig zur Förderrichtung der Transportvorrichtung orientiert ist. Weiter kann es sein, dass die Verstellmechanik zum Führen des mindestens einen Kontaktelementes bei einem jeweiligen Versatz in horizontaler Richtung bzw. ausschließlich in horizontaler Richtung ausgebildet ist.

Weiter haben sich Ausführungsformen bewährt, bei welchen das mindestens eine Kontaktelement über die Verstellmechanik derart geführt ist, dass das mindestens eine Kontaktelement bei einem jeweiligen Versatz senkrecht zu einer Förderrichtung der Transportvorrichtung wenigstens abschnittsweise oder sogar zumindest näherungsweise vollständig hinter eine entlang der Förderrichtung verlaufende seitliche Begrenzung des mindestens einen Führungselementes zurücktritt.

Das mindestens eine Führungselement kann seitlich und entlang der Förderrichtung der Transportvorrichtung einen Verschleißschutz oder mehrere Rollen umfassen. Der Verschleißschutz oder die mehreren Rollen können die entlang der Förderrichtung verlaufende seitliche Begrenzung des mindestens einen Führungselementes ausbilden. Bewährt hat es sich beispielsweise, wenn das mindestens eine Führungselement ein C-Profil besitzt, in welchem der Verschleißschutz oder die mehreren Rollen aufgenommen sind bzw. welches C-Profil den Verschleißschutz oder die mehreren Rollen trägt.

Weiter kann es sein, dass das mindestens eine Kontaktelement über die Verstellmechanik derart geführt ist, dass sich das mindestens eine wenigstens abschnittsweise oder sogar zumindest näherungsweise vollständig hinter die entlang der Förderrichtung verlaufende seitliche Begrenzung des mindestens einen Führungselementes zurückgetretene Kontaktelement in vertikaler Richtung unterhalb des mindestens einen Führungselementes befindet.

Auch haben sich Ausführungsformen bewährt, bei welchen die Verstellmechanik mindestens eine Feder umfasst, welche durch einen Versatz des mindestens einen Kontaktelementes aus der Warteposition in die Arbeitsposition spannbar ist. Hierbei kann es sein, dass über eine Federkraft der mindestens einen gespannten Feder das mindestens eine Kontaktelement aus der Arbeitsposition in die Warteposition zurückbewegbar ist. Die mindestens eine Feder kann beispielsweise als Drehfeder bzw. als Torsionsfeder ausgebildet sein. Auch kann es sich bei der mindestens einen Feder beispielsweise um mindestens eine pneumatische Feder handeln.

Der Transportabschnitt kann wenigstens einen Anschlag umfassen, welcher eine Bewegung des mindestens einen Kontaktelementes begrenzt und welcher die jeweilige Warteposition bzw. jeweilige Ausgangsposition für das mindestens eine Kontaktelement festlegt.

Eine Vorspannung der mindestens einen Feder kann zudem in diversen Ausführungsformen einstellbar sein. Vorstellbar ist beispielsweise, dass der Transportabschnitt mindestens einen Aktor zum Einstellen der Vorspannung der mindestens einen Feder umfasst. Bewährt haben sich in der Praxis Ausführungsformen, bei welchen eine Vorspannung der mindestens einen Feder händisch bzw. durch einen Benutzer einstellbar ist.

Weiter kann es sein, dass die für ein jeweiliges Kontaktelement vorgesehene Verstellmechanik mindestens ein Drehlager, wenigstens einen Hebel und wenigstens ein weiteres Drehlager umfasst, wobei der wenigstens eine Hebel über das mindestens eine Drehlager an der wenigstens einen vorgegebenen Befestigungsposition der wenigstens einen Stütze gelagert ist und wobei das mindestens eine Kontaktelement über das wenigstens eine weitere Drehlager am wenigstens einen Hebel angeordnet ist.

Eine Schwenkachse, um welche der wenigstens eine Hebel relativ zur jeweiligen Stütze über das mindestens eine Drehlager rotierend bewegbar ist, kann eine vertikale Orientierung besitzen und ggf. durch das jeweilige Führungselement bzw. durch die jeweilige Stütze verlaufen, an welcher der wenigstens eine Hebel gelagert ist. Auch eine weitere Schwenkachse, um welche das jeweilige Kontaktelement relativ zum jeweiligen Hebel, an welchem das jeweilige Kontaktelement angeordnet ist, rotierend bewegt werden kann, kann eine vertikale Orientierung besitzen. Die Schwenkachse des mindestens einen Drehlagers und die weitere Schwenkachse des wenigstens einen weiteren Drehlagers können somit parallel zueinander orientiert sein.

Beispielsweise kann es sein, dass die für ein jeweiliges Kontaktelement vorgesehene Verstellmechanik mindestens zwei Drehlager, wenigstens zwei Hebel und wenigstens zwei weitere Drehlager umfasst. Hierbei kann es sein, dass über ein jeweiliges Drehlager der mindestens zwei Drehlager ein jeweiliger Hebel der wenigstens zwei Hebel an einer jeweiligen Befestigungsposition einer zugeordneten Stütze gelagert ist. Zudem kann es sein, dass das jeweilige Kontaktelement über die wenigstens zwei weiteren Drehlager an einem jeweiligen Hebel der wenigstens zwei Hebel angeordnet ist.

Die Verstellmechanik kann somit nach dem Prinzip einer Parallelogramm-Kinematik arbeiten. Schwenkachsen der mindestens zwei Drehlager können jeweils vertikal orientiert sein und jeweils durch die jeweilige Stütze bzw. durch das jeweilige Führungselement verlaufen, welches die jeweiligen Befestigungspositionen für die mindestens zwei Drehlager ausbildet. Auch weitere Schwenkachsen der wenigstens zwei weiteren Drehlager können jeweils eine vertikale Orientierung besitzen.

Darüber hinaus kann der Transportabschnitt wenigstens zwei parallel zueinander verlaufende Gassen umfassen bzw. wenigstens zwei parallel zueinander verlaufende Gassen ausbilden. Hierbei kann ein bestimmtes Führungselement des mindestens einen Führungselementes jeweils eine seitliche Begrenzung für die wenigstens zwei parallel zueinander verlaufenden Gassen ausbilden.

Alternativ oder ergänzend hierzu kann es sein, dass ein zum Bilden einer ersten Gasse vorgesehenes Führungselement und ein zum Bilden einer zweiten Gasse vorgesehenes Führungselement aneinander anstehen oder sich in einem Nahbereich zueinander befinden.

Die Erfindung betrifft zudem ein Verfahren zum sensorischen Erkennen von Artikeln. Merkmale, welche vorhergehend bereits zu diversen Ausführungsformen des Transportabschnittes beschrieben wurden, können ebenso bei den nachfolgend beschriebenen Ausführungsformen des erfindungsgemäßen Verfahrens vorgesehen sein und werden nicht mehrfach erwähnt.

Ebenso können nachfolgend zu diversen Ausführungsformen des Verfahrens beschriebene Merkmale bei den bereits beschriebenen Ausführungsformen des Transportabschnittes vorgesehen sein ohne mehrfach erwähnt zu werden. Der Transportabschnitt kann ggf. zur Durchführung der nachfolgend beschriebenen Ausführungsformen des erfindungsgemäßen Verfahrens ausgebildet bzw. hierzu vorbereitet sein.

Die Artikel, welche im Rahmen des Verfahrens erkannt werden, können insbesondere durch Getränkebehälter bzw. durch Getränkeflaschen und/oder durch Getränkedosen ausgebildet sein.

Im Rahmen des Verfahrens wird eine Vielzahl von Artikeln über eine Transportvorrichtung in wenigstens einer Gasse gefördert. Die Transportvorrichtung kann mindestens ein umlaufend angetriebenes Transportband und/oder mindestens eine umlaufend angetriebene Mattenkette besitzen, auf welcher die Vielzahl an Artikeln aufsteht und über welches die Vielzahl an Artikeln entlang einer vorgegebenen Förderrichtung bewegt wird. Die wenigstens eine Gasse kann unter Zuhilfenahme wenigstens eines Führungselementes gebildet sein, welches eine seitliche Begrenzung für die Vielzahl an Artikeln, die über die Transportvorrichtung in der wenigstens einen Gasse bewegt wird, festlegt.

Es ist vorgesehen, dass im Rahmen der Förderung Artikel nacheinander mindestens ein im Bereich der wenigstens einen Gasse angeordnetes Kontaktelement versetzen, welches mindestens eine Kontaktelement über eine Verstellmechanik an wenigstens einer vorgegebenen Befestigungsposition wenigstens einer Stütze gelagert ist. Das mindestens eine im Bereich de wenigstens einen Gasse angeordnete Kontaktelement kann zumindest abschnittsweise in die Gasse hineinragen oder auch vollständig in der Gasse angeordnet sein, woraufhin das mindestens eine bis dahin vollständig in der Gasse angeordnete oder in die Gasse hineinragende mindestens eine Kontaktelement versetzt wird.

Weiter ist vorgesehen, dass aus einem jeweiligen Versatz des mindestens einen Kontaktelementes resultierend wenigstens ein Sensor betätigt wird. Die Betätigung des wenigstens einen Sensors kann über die Verstellmechanik erfolgen, welches hierzu mit dem wenigstens einen Sensor zusammenwirkt.

Bei dem Verfahren ist vorgesehen, dass das mindestens eine Kontaktelement über die Verstellmechanik derart geführt wird, dass das mindestens eine Kontaktelement bei einem jeweiligen Versatz seinen relativen Abstand gegenüber der wenigstens einen vorgegebenen Befestigungsposition verändert.

Alternativ oder ergänzend hierzu kann es sein, dass das mindestens eine Kontaktelement über die Verstellmechanik bei einem jeweiligen Versatz mit einer Richtungskomponente geführt wird, entlang welcher Richtungskomponente die Vielzahl an Artikeln über die Transportvorrichtung in der Gasse gefördert wird. Die Richtungskomponente kann somit einer Förderrichtung der Transportvorrichtung entsprechen.

Denkbar ist, dass die wenigstens eine Gasse unter Zuhilfenahme mindestens eines entlang einer Förderrichtung der Transportvorrichtung verlaufenden Führungselementes gebildet wird. Hierbei kann das mindestens eine Kontaktelement über die Verstellmechanik derart geführt werden, dass das mindestens eine Kontaktelement bei einem jeweiligen Versatz senkrecht zur Förderrichtung der Transportvorrichtung wenigstens abschnittsweise oder sogar zumindest näherungsweise vollständig hinter eine entlang der Förderrichtung verlaufende seitliche Begrenzung des mindestens einen Führungselementes zurücktritt.

Bewährt hat es sich auch, wenn das mindestens eine Kontaktelement über die Verstellmechanik derart geführt wird, dass sich das mindestens eine wenigstens abschnittsweise oder sogar zumindest näherungsweise vollständig hinter die entlang der Förderrichtung verlaufende seitliche Begrenzung des mindestens einen Führungselementes zurückgetretene Kontaktelement in vertikaler Richtung unterhalb des mindestens einen Führungselementes befindet.

Weiter kann es sein, dass die Verstellmechanik mindestens eine Feder umfasst, welche mindestens eine Feder bei einem jeweiligen Versatz des mindestens einen Kontaktelementes gespannt wird und welches mindestens eine sodann gespannte Feder mittels ihrer Federkraft das mindestens eine Kontaktelement nach einer Betätigung des wenigstens einen Sensors in eine Ausgangslage zurückbewegt. Bei der mindestens einen Feder kann es sich um mindestens eine Drehfeder bzw. um mindestens eine Torsionsfeder handeln.

Bewährt haben sich beispielsweise Ausführungsformen, bei welchen eine Vorspannung der mindestens einen Feder eingestellt wird. Beispielsweise kann es sein, dass eine Vorspannung der mindestens einen Feder über wenigstens ein der mindestens einen Feder zugeordnetes Spannrad eingestellt wird, welches hierzu drehend bewegt wird. Insbesondere kann es sein, dass eine Vorspannung der mindestens einen Feder über wenigstens ein der mindestens einen Feder zugeordnetes Spannrad eingestellt wird, welches hierzu händisch bzw. von einem Benutzer drehend bewegt wird.

Zudem haben sich Ausführungsformen bewährt, bei welchen die Verstellmechanik mindestens ein Drehlager, wenigstens einen Hebel und wenigstens ein weiteres Drehlager umfasst, wobei der wenigstens eine Hebel über das mindestens eine Drehlager an der wenigstens einen vorgegebenen Befestigungsposition einer zugeordneten Stütze gelagert ist und das mindestens eine Kontaktelement über das wenigstens eine weitere Drehlager am wenigstens einen Hebel angeordnet ist.

Hierbei kann es sein, dass bei einem jeweiligen Versatz der wenigstens eine Hebel um mindestens eine Schwenkachse des mindestens einen Drehlagers geschwenkt wird und das mindestens eine Kontaktelement hierbei zeitlich überlagert um wenigstens eine weitere Schwenkachse des wenigstens einen weiteren Drehlagers geschwenkt wird. Es kann hierbei sein, dass aus diesen Schwenkbewegungen resultierend das jeweilige Kontaktelement linear und entlang einer Richtung bewegt wird, welche schräg zu einer Förderrichtung der Transportvorrichtung verläuft.

Es kann sein, dass im Rahmen des Verfahrens das mindestens eine Kontaktelement über die Verstellmechanik bei einem jeweiligen Versatz in horizontaler Richtung bzw. ausschließlich in horizontaler Richtung geführt wird.

Es sei an dieser Stelle ausdrücklich erwähnt, dass alle Aspekte und Ausführungsvarianten, die im Zusammenhang mit dem erfindungsgemäßen Verfahren erläutert wurden, gleichermaßen Teilaspekte des erfindungsgemäßen Transportabschnittes betreffen oder bilden können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für den erfindungsgemäßen Transportabschnitt. In umgekehrter Weise gilt dasselbe, so dass auch alle Aspekte und Ausführungsvarianten, die im Zusammenhang mit dem erfindungsgemäßen Transportabschnitt erläutert wurden, gleichermaßen Teilaspekte des erfindungsgemäßen Verfahrens betreffen oder sein können. Wenn daher an einer Stelle bei der Beschreibung oder auch bei den Anspruchsdefinitionen zum erfindungsgemäßen Transportabschnitt von bestimmten Aspekten und/oder Zusammenhängen und/oder Wirkungen die Rede ist, so gilt dies gleichermaßen für das erfindungsgemäße Verfahren.

Um dem Fachmann als Leser das Verständnis der Erfindung zu erleichtern, sei zudem nachfolgend nochmals die Erfindung anhand konkreter zu erkennenden Ausführungsvarianten dargestellt, die jedoch im Umkehrschluss nicht als Einschränkung der oben zu findenden allgemeiner gefassten Erfindungsgedanken verstanden werden dürfen. Erläutert werden zudem einzelne Schritte, wie sie bei diversen Ausführungsformen des erfindungsgemäßen Verfahrens vorgesehen und implementiert sein können.

Der hier so bezeichnete Transportabschnitt umfasst normalerweise eine Transportvorrichtung, die beispielsweise durch ein umlaufend angetriebenes Transportband, durch ein Mattenband, durch einen Mattenkettenförderer oder eine andere Horizontalfördereinrichtung ausgebildet sein kann. Mit der Transportvorrichtung können Artikel, die bspw. durch Getränkebehälter ausgebildet sein können, entlang einer definierten Förderrichtung bewegt werden. Die Transportvorrichtung steht hierbei grundsätzlich mit einer hierfür geeigneten und entsprechend ausgestatteten und programmierten Steuer- und/oder Regeleinrichtung in einer Datenaustausch-Verbindung, wobei die Steuer- und/oder Regeleinrichtung die Transportvorrichtung zum Bewegen von Artikeln in zweckmäßiger und geeigneter Weise ansteuern kann.

Zwei Führungselemente erstrecken sich bei dem Transportabschnitt entlang der Transportvorrichtung und sind hierbei in etwa parallel zur Förderrichtung positioniert bzw. ausgerichtet. Ein relativer Abstand der Führungselemente ist hierbei vorzugweise derart gewählt, dass sich zwischen den Führungselementen einzelne Getränkebehälter, Zusammenstellungen an Getränkebehältern oder Gebinde mit jeweils mehreren Getränkebehältern mit geringem Abstand zu den Führungselementen bewegen können, ohne hierbei zwischen den Führungselementen gehemmt oder geklemmt zu werden. Die Führungselemente können insbesondere jeweils ein entlang der Förderrichtung verlaufendes C-Profil ausbilden.

In diesem C-Profil können Rollen oder weitere Mittel zum Verschleißschutz aufgenommen sein, an denen Getränkebehälter während ihres Transportes entlanggleiten können, ohne dass die Getränkebehälter hierbei beschädigt werden. Wenn hier von Getränkebehältern gesprochen wird, so sind damit grundsätzlich auch alle denkbaren Artikel gemeint, die ggf. nicht als Getränkebehälter ausgebildet sind.

Die Führungselemente erstrecken sich entlang ihrer jeweiligen Längserstreckung über einen definierten Weg in Förderrichtung, wobei die Länge der Führungselemente sich nach dem jeweiligen Bedarf orientiert. Auch können in der Praxis mehrere solcher Gassen, wie sie hier beschrieben sind, über mehrere Führungselemente gebildet werden, die hierzu parallel zueinander und in Förderrichtung orientiert sein können.

Über einen solchen Transportabschnitt können Artikel oder Getränkebehälter in Richtung einer weiteren Handhabung, wie beispielsweise einer Verpackungsmaschine oder Gruppiermaschine, bewegt werden. Da es zur weiteren Verarbeitung von Getränkebehältern häufig erforderlich ist, dass die Getränkebehälter zu einem genauen Zeitpunkt eine nachgeordnete Handhabungsvorrichtung erreichen, wird in der Praxis eine Position von Getränkebehältern im Verlauf ihrer Bewegung entlang des Transportabschnittes sensorisch erfasst. Sofern der Steuer- und/oder Regeleinrichtung die jeweilige Position bekannt ist, kann die Steuer- und/oder Regeleinrichtung durch eine entsprechende Regelung einer Fördergeschwindigkeit der Transportvorrichtung veranlassen, dass die jeweiligen Getränkebehälter zu einem vorgegebenen Zeitpunkt an eine nachgeordnete Handhabungsvorrichtung weitergereicht werden.

Der Transportabschnitt dient somit einerseits dazu, einen Verbringungsweg zwischen unterschiedlichen Stationen einer Verpackungsstrecke zu überbrücken. Darüber hinaus kann mittels des Transportabschnittes gewährleistet werden, dass Artikel bzw. Getränkebehälter eine dem Transportabschnitt nachgeordnete Handhabungsvorrichtung zu einem festgelegten Zeitpunkt mit einer vorgegebenen Taktfrequenz erreichen. Informationen hierzu sind der Steuer- und/oder Regeleinrichtung bekannt und werden normalerweise bereits seitens eines Benutzers auf der Steuer- und/oder Regeleinrichtung hinterlegt.

Bei dem Transportabschnitt kann zum Zwecke des Erfassens oder Erkennens einer Position von Getränkebehältern ein Kontaktelement vorgesehen sein, welches sich in einer Warteposition befinden und hierbei in der Gasse angeordnet sein kann, die vorhergehend bereits beschrieben wurde und zwischen den Führungselementen ausgebildet wird. Das Kontaktelement kann in der Warteposition bspw. bereits unterhalb bzw. auf vertikal geringerem Höhenniveau als die Führungselemente positioniert sein. Hierdurch können die Kontaktelemente mit einer seitlichen Mantelfläche eines jeweiligen Getränkebehälters, welche sich nahe an einem Getränkebehälterboden befindet, in Kontakt treten, wenn Getränkebehälter über die Transportvorrichtung in Förderrichtung bewegt werden und hierbei in Oberflächenkontakt mit den Kontaktelementen gelangen.

An Führungselementen kann wahlweise jeweils ein Kontaktelement angeordnet sein. Um das Kontaktelement in der Warteposition halten zu können, umfasst das Führungselement des Transportabschnittes bspw. zwei Stützen, die jeweils als Befestigungsplatte ausgebildet sein und die jeweils zwei fluchtend zueinander orientierte Befestigungspositionen ausbilden können. Auch das weitere Kontaktelement kann in entsprechender Weise gehalten sein, wobei zwei weitere parallel zueinander orientierte Stützen vorgesehen sein können, die jeweils als Befestigungsplatte ausgebildet sind und jeweils zwei Befestigungspositionen ausbilden.

Die Stützen bzw. die Befestigungsplatten sind vorliegend jeweils als Bestandteil eines Führungselementes ausgebildet. Somit erstrecken sich die Stützen bzw. die Befestigungsplatten über einen bestimmten Abschnitt des jeweiligen Führungselementes in Förderrichtung, ragen hierbei jedoch nicht in die jeweilige Gasse hinein. Vorzugsweise ragen die Stützen bzw. die Befestigungsplatten auf einer der Gasse abgewandten Seite des jeweiligen Führungselementes seitlich nicht über das jeweilige Führungselement hinaus. Hierdurch besitzen die Führungselemente einen sehr kompakten Aufbau und stellen zudem eine Möglichkeit zur Lagerung der Kontaktelemente bereit.

Sofern ein Transportabschnitt mehrere Gassen umfasst und hierzu Führungselemente unterschiedlicher Gassen nebeneinander angeordnet werden müssen, kann der Abstand zwischen diesen Führungselementen sehr geringgehalten werden, da die Befestigungsplatten seitlich nicht über das jeweilige Führungselemente hinausragen. Eine Lagerung für die Kontaktelemente, welche sich bei aus dem Stand der Technik bekannten Transportabschnitten auf einer der Gasse abgewandten Seite eines jeweiligen Führungselementes befindet, ist bei dem hier beschriebenen Transportabschnitt nicht unbedingt vorzusehen.

An den Befestigungspositionen, welche bspw. durch die Befestigungsplatten ausgebildet werden können, kann jeweils ein Drehlager angeordnet sein. Mit solchen Drehlagern kann jeweils ein Hebel in Verbindung stehen. Diese Hebel können über das jeweilige Drehlager geschwenkt werden. Eine jeweilige Schwenkachse der Drehlager ist vorliegend jeweils ungefähr vertikal orientiert. Die Schwenkachsen der Drehlager verlaufen somit in etwa parallel zueinander.

Außerdem kann an einem dem jeweiligen Führungselement abgewandten Endbereich eines jeweiligen Hebels jeweils ein weiteres Drehlager angeordnet sein. Auch die Schwenkachsen dieser weiteren Drehlager sind vorliegend jeweils vertikal orientiert und verlaufen somit parallel zueinander.

Mit den weiteren Drehlagern stehen die Kontaktelemente in Verbindung, so dass ein jeweiliges Kontaktelement um vertikal orientierte Schwenkachsen der jeweiligen weiteren Drehlager gedreht werden kann. Die Drehlager, die weiteren Drehlager sowie die Hebel sind Bestandteil einer jeweiligen Verstellmechanik für ein jeweiliges Kontaktelement. Die Verstellmechaniken arbeiten jeweils nach dem Prinzip einer Parallelogramm-Kinematik.

Über den Transportabschnitt werden Getränkebehälter in Förderrichtung hintereinander bewegt, wobei aufeinanderfolgende Getränkebehälter hierbei in Förderrichtung beabstandet zueinander sind. Im Verlauf der Bewegung treten somit Getränkebehälter nacheinander mit den Kontaktelementen in Oberflächenkontakt und bewegen das jeweilige Kontaktelement unter Oberflächenkontakt sodann relativ zur jeweiligen Befestigungsposition.

Durch die Anordnung der Kontaktelemente über die weiteren Drehlager an den Hebeln und durch die Anordnung der Hebel an den Drehlagern wird eine Zwangsführung für die Kontaktelemente gebildet, über welche die Kontaktelemente bei einem jeweiligen Versatz über einen jeweiligen Getränkebehälter geführt werden. Tritt ein jeweiliger Getränkebehälter mit einem jeweiligen Kontaktelement in Oberflächenkontakt, so versetzt der jeweilige Getränkebehälter hierauf das jeweilige Kontaktelement mit einer Richtungskomponente, welche der Förderrichtung der Transportvorrichtung entspricht. Zeitlich überlagert versetzt ein jeweiliger Getränkebehälter das jeweilige Kontaktelemente mit einer weiteren Richtungskomponente, welche senkrecht zur Förderrichtung orientiert ist.

Die Bewegung des jeweiligen Kontaktelementes erfolgt somit schräg zur Förderrichtung und relativ zur jeweiligen Befestigungsposition, an welcher das jeweilige Kontaktelement angeordnet ist. Weiter erfolgt die Bewegung des jeweiligen Kontaktelementes bei einem jeweiligen Versatz in horizontaler Richtung, wobei das jeweilige Kontaktelement sein jeweiliges vertikales Höhenniveau beibehält bzw. während eines jeweiligen Versatzes weder angehoben noch abgesenkt wird.

Durch eine entsprechende Verstellmechanik, welche nach dem Prinzip einer solchen Parallelogramm-Kinematik arbeitet, besteht darüber hinaus die Möglichkeit, dass das jeweilige Kontaktelement bei einem jeweiligen Versatz die zur Bewegung von Getränkebehältern zwischen den Führungselementen gebildete Gasse vollständig verlassen kann und somit bei einem jeweiligen Versatz vollständig hinter eine seitliche Begrenzung eines jeweiligen Führungselementes, welche seitliche Begrenzung in Förderrichtung verläuft, vollständig zurücktritt. Somit kann es sein, dass ein jeweiliges Kontaktelement nach einem jeweiligen Versatz nicht mehr in eine jeweilige Gasse hineinragt und zudem unterhalb eines jeweiligen Führungselementes angeordnet ist.

Die solchermaßen beschriebene Anordnung des Transportabschnittes lässt bereits erkennen, dass der Transportabschnitt einen einfachen und kompakten Aufbau besitzt. So bilden die Stützen der Führungselemente die Befestigungspositionen aus. Die gesamte Lagerung der Kontaktelemente ragt auf einer der Gasse abgewandten Rückseite der Führungselemente nicht über die Führungselemente hinaus. Die Peripherie der Führungselemente, welche zugleich eine Möglichkeit zur Lagerung der Kontaktelemente bereitstellen, wird durch die C-Profile und den hierin ggf. aufgenommenen Verschleißschutz vorgegeben.

Hierdurch besteht in der Praxis die Möglichkeit, eine Vielzahl an Gassen durch mehrere Führungselemente zu bilden, wobei unmittelbar benachbarte Führungselemente unterschiedlicher Gassen hierbei mit Rückseiten aneinander anstehen können oder zumindest sehr nah aneinander angeordnet sein können. Bei aus dem Stand der Technik bereits bekannten Transportabschnitten ist, wie dies vorhergehend bereits erwähnt wurde, eine jeweilige Lagerung für die Kontaktelemente auf einer der jeweiligen Gasse abgewandten Rückseite von Führungselementen positioniert, so dass sich zwischen Führungselementen unterschiedlicher Gassen jeweils mindestens ein solches Lager befindet. Hierdurch können die Führungselemente nicht nah aneinander positioniert werden, wodurch aus dem Stand der Technik bekannte Transportabschnitte häufig einen größeren Aufbau senkrecht zur Förderrichtung besitzen.

Um in der jeweiligen Gasse über die Transportvorrichtung geförderte Artikel erkennen zu können, stehen die Kontaktelemente mit einem jeweiligen Sensor in Wirkverbindung. Die Sensoren sind jeweils an einem Winkel angeordnet, wobei die Winkel mit einer jeweiligen Stütze bzw. mit einem jeweiligen Führungselemente verschraubt sein können. Über einen jeweiligen Versatz eines jeweiligen Kontaktelementes wird ein jeweiliger Sensor betätigt, wobei die Sensoren mit der Steuer- und/oder Regeleinrichtung in Verbindung stehen. Die Steuer- und/oder Regeleinrichtung erhält somit Informationen bei einer Betätigung eines jeweiligen Sensors.

Die Drehlager bilden hierzu eine jeweilige Schwenkachse aus. An der Schwenkachse des jeweiligen Drehlagers ist eine jeweilige Nocke drehfest angeordnet. Wird ein jeweiliges Kontaktelement über einen jeweiligen Getränkebehälter versetzt, dann bewirkt ein solcher Versatz eine Drehbewegung der jeweiligen Schwenkachse. Die drehfest an der jeweiligen Schwenkachse angeordnete jeweilige Nocke wird zusammen mit der jeweiligen Schwenkachse rotierend bewegt und betätigt hierdurch den jeweiligen Sensor.

Da die Steuer- und/oder Regeleinrichtung mit den Sensoren in Datenverbindung steht, wird die Betätigung der Sensoren von der Steuer- und/oder Regeleinrichtung erkannt und registriert und kann in einer Weise verarbeitet werden, indem die Steuer- und/oder Regeleinrichtung überprüft, ob die jeweilige Betätigung zu einem erwarteten Zeitpunkt erfolgt ist. Sofern der Zeitpunkt einer Betätigung nicht mit dem erwarteten Zeitpunkt übereinstimmt, wird von der Steuer- und/oder Regeleinrichtung hierauf eine Transportgeschwindigkeit der Transportvorrichtung derart angepasst bzw. geregelt, dass die jeweiligen Getränkebehälter eine nachfolgende Arbeitsstation oder Handhabungsvorrichtung zu einem vorgegebenen Zeitpunkt erreichen.

Die Sensoren können bspw. jeweils als induktive Sensoren ausgebildet sein. Vorstellbar ist jedoch auch, dass für einen Transportabschnitt entsprechend der hier erläuterten Ausgestaltung weitere Sensoren, wie beispielsweise Tastsensoren, Verwendung finden, um einen Versatz eines jeweiligen Kontaktelementes zuverlässig erkennen zu können.

Hinsichtlich einer möglichen Formgebung der Kontaktelemente kann es von Vorteil sein, wenn sich die Kontaktelemente in Richtung ihrer freien Endbereiche jeweils verjüngen. Die Kontaktelemente können bspw. jeweils durch Kunststoff ausgebildet sein. Aber auch metallische Kontaktelemente oder solche aus einem geeigneten Verbundmaterial können vorteilhaft eingesetzt werden.

Außerdem können an den Befestigungsplatten optional eine Lichtschranke und ein Spiegel angeordnet sein, welcher Spiegel das Signal der Lichtschranke reflektiert. Die Steuer- und/oder Regeleinrichtung steht mit der Lichtschranke in Verbindung und kann unter Berücksichtigung von Informationen, die über die Lichtschranke bereitgestellt werden, überprüfen, ob ein jeweiliges Kontaktelement durch Getränkebehälter versetzt wurde oder ob ein jeweiliger Versatz durch eine unerwünschte Störung verursacht worden ist. Die Praxis hat hierbei insbesondere gezeigt, dass die Kontaktelemente nach einem jeweiligen Versatz beispielsweise durch Schrumpffolie klemmen können, so dass diese nicht in die vorgesehene Warteposition überführt oder zurückgeführt werden. Unter Zuhilfenahme einer Lichtschranke und des zugehörigen Spiegels kann die Steuer- und/oder Regeleinrichtung eine solche Störung erkennen und Informationen hierzu ggf. auf einer nicht mit dargestellten Anzeigeeinheit optisch ausgeben. Ein Benutzer kann sodann die jeweilige Störung beseitigen.

Weitere Elemente seien nachfolgend beschrieben, bspw. mehrere Federn, die den Drehlagern jeweils zugeordnet sein können. Werden die Kontaktelemente durch einen jeweiligen Getränkebehälter versetzt, so drehen sich hierbei die Schwenkachsen bzw. die Schwenkwellen, wodurch die Federn gespannt werden. Bei den Federn kann es sich bspw. jeweils um Torsionsfedern bzw. um Drehfedern handeln. Verliert ein jeweiliger Getränkebehälter nach Betätigung des jeweiligen Sensors seinen Oberflächenkontakt zum jeweiligen Kontaktelement, so können die bereits gespannten Federn durch ihre Federkraft die Kontaktelemente in eine Ausgangslage bzw. Warteposition zurückbewegen, wozu die Federn durch ihre Federkraft die Schwenkachsen drehen.

Wahlweise kann vorgesehen sein, dass die jeweilige Verstellmechanik über einen jeweiligen Anschlag verfügt. Die Ausgangsposition bzw. Warteposition wird für die Kontaktelemente über die Anschläge vorgegeben. Werden die Kontaktelemente durch die Federkraft der Federn nach einer Betätigung des jeweiligen Sensors zurückbewegt, so treten die Hebel mit den Anschlägen in Kontakt und begrenzen hierdurch die Verstellbewegung der Kontaktelemente. Somit werden die Kontaktelemente nach einer Betätigung eines jeweiligen Sensors sehr exakt in ihre jeweilige Ausgangsposition bzw. Warteposition rücküberführt, bis die Kontaktelemente sodann erneut über einen Artikel oder über mehrere Artikel aus der Ausgangsposition bzw. Warteposition versetzt und die Sensoren betätigt werden.

Außerdem kann vorgesehen sein, dass der Transportabschnitt für jede Feder ein eigenes Spannrad besitzt. Über das jeweilige Spannrad kann eine Vorspannung der jeweiligen Feder bedarfsweise händisch eingestellt werden. Hierzu wird das jeweilige Spannrad rotierend um die jeweilige Schwenkachse bewegt. Die rotierende Bewegung des jeweiligen Spannrades kann vorliegend händisch bzw. durch einen Benutzer vorgenommen werden. Getränkebehälter, welche mit den Kontaktelementen in Anlage gelangen und das jeweilige Kontaktelement versetzen, können eine unterschiedliche Masse besitzen. Die jeweilige Vorspannung der Federn ist hierbei auf die jeweilige Masse von Getränkebehältern abzustimmen, welche das jeweilige Kontaktelement versetzen sollen. Durch Federn und durch eine Einstellung ihrer jeweiligen Vorspannung mittels Spannrädern kann die jeweilige Vorspannung auf einfache Art und Weise auf entlang des Transportabschnittes zu bewegende Getränkebehälter mit unterschiedlicher Masse abgestimmt werden.

Nachfolgend sollen in verkürzter Weise aufeinanderfolgende Prozessschritte einer Ausführungsform eines erfindungsgemäßen Verfahrens beschrieben werden. So werden in einem ersten Schritt zunächst mehrere Getränkebehälter in einer Gasse gefördert, welche zwischen zwei Führungselementen ausgebildet ist, wobei im Rahmen der Förderung ein Getränkebehälter mit einem Kontaktelement in Oberflächenkontakt gelangt. Die Förderung erfolgt über eine Transportvorrichtung, welche die Getränkebehälter entlang einer Förderrichtung in der Gasse bewegt.

Im nachfolgenden zweiten Schritt versetzt ein Getränkebehälter oder mehrere Getränkebehälter das jeweilige Kontaktelement unter Ausbildung eines Oberflächenkontaktes aus einer Warteposition in eine Arbeitsposition. Hierbei wird ein jeweiliges Kontaktelement über eine jeweilige Verstellmechanik mit einer Richtungskomponente geführt, entlang welcher Richtungskomponente die Getränkebehälter über die Transportvorrichtung in der Gasse gefördert werden. Die Richtungskomponente entspricht hierbei der Förderrichtung, entlang welcher die Transportvorrichtung Artikel oder Getränkebehälter in der jeweiligen Gasse bewegt. Somit wird das jeweilige Kontaktelement bei einem jeweiligen Versatz temporär in Förderrichtung zusammen mit den Getränkebehältern mitbewegt.

Gleichzeitig werden durch den Versatz des jeweiligen Kontaktelementes Federn gespannt, die als Bestandteil einer jeweiligen Verstellmechanik ausgebildet sind.

Wurde das Kontaktelement vollständig versetzt, so befindet sich das Kontaktelement sodann in einer Arbeitsposition. In dieser Arbeitsposition betätigt das Kontaktelement einen Sensor, welcher mit einer Steuer- und/oder Regeleinrichtung in Verbindung steht. Die Steuer- und/oder Regeleinrichtung kann hieraus Informationen zur jeweiligen Position der Getränkebehälter ableiten und eine Transportgeschwindigkeit der Transportvorrichtung regeln, so dass der jeweilige Getränkebehälter eine dem Transportabschnitt nachgeordnete Arbeitsstation zu einem vorgegebenen Zeitpunkt erreicht.

Nach einer Betätigung des jeweiligen Sensors verliert der jeweilige Getränkebehälter seinen Oberflächenkontakt zum jeweiligen Kontaktelement. Die bis dahin noch immer gespannten Federn bewegen sodann im weiteren Schritt das jeweilige Kontaktelement in eine Ausgangsposition bzw. Warteposition zurück, bis erneut ein weiterer Getränkebehälter oder mehrere weitere Getränkebehälter mit dem jeweiligen Kontaktelement in Oberflächenkontakt gelangen und das jeweilige Kontaktelement sodann zur Betätigung eines jeweiligen Sensors erneut versetzen.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Perspektivansicht in Richtung von oben auf eine Ausführungsform eines erfindungsgemäßen Transportabschnittes und verdeutlicht einzelne Schritte, wie sie bei diversen Ausführungsformen des erfindungsgemäßen Verfahrens vorgesehen sein können.
Fig. 2 zeigt eine schematische Perspektivansicht in Richtung von unten auf die Ausführungsform eines erfindungsgemäßen Transportabschnittes nach Fig. 1 und verdeutlicht einzelne Schritte, wie sie bei diversen Ausführungsformen des erfindungsgemäßen Verfahrens vorgesehen sein können.
Fig. 3 zeigt eine weitere schematische Perspektivansicht in Richtung von oben auf die Ausführungsform des erfindungsgemäßen Transportabschnittes nach Figuren 1 und 2 unter Verdeutlichung weiterer Aspekte.
Fig. 4 zeigt eine weitere schematische Perspektivansicht in Richtung von unten auf die Ausführungsform eines erfindungsgemäßen Transportabschnittes nach Figuren 1 bis 3 unter Verdeutlichung weiterer Aspekte.
Fig. 5 zeigt im Flussdiagramm einzelne Schritte einer Ausführungsform eines erfindungsgemäßen Verfahrens.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar.

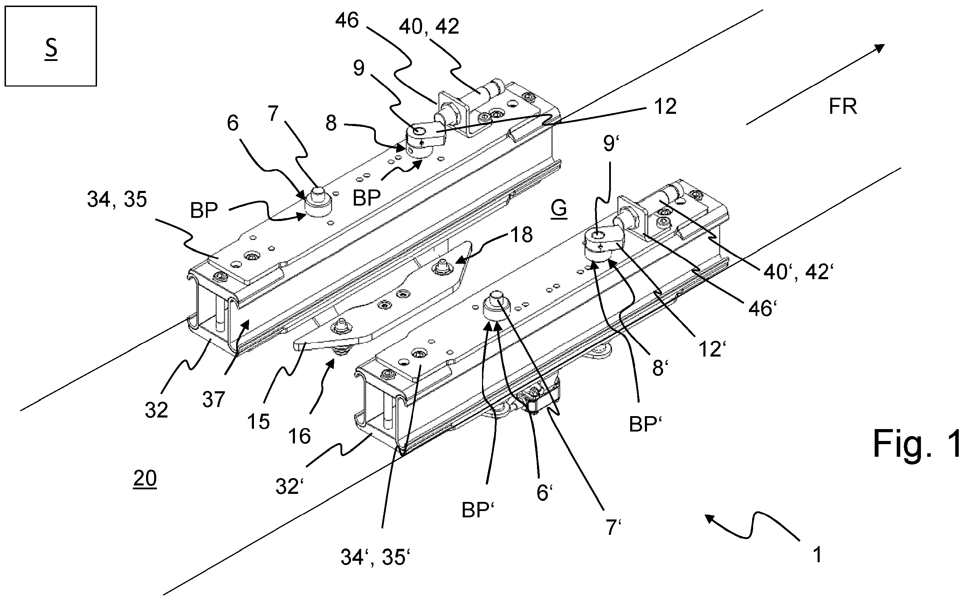

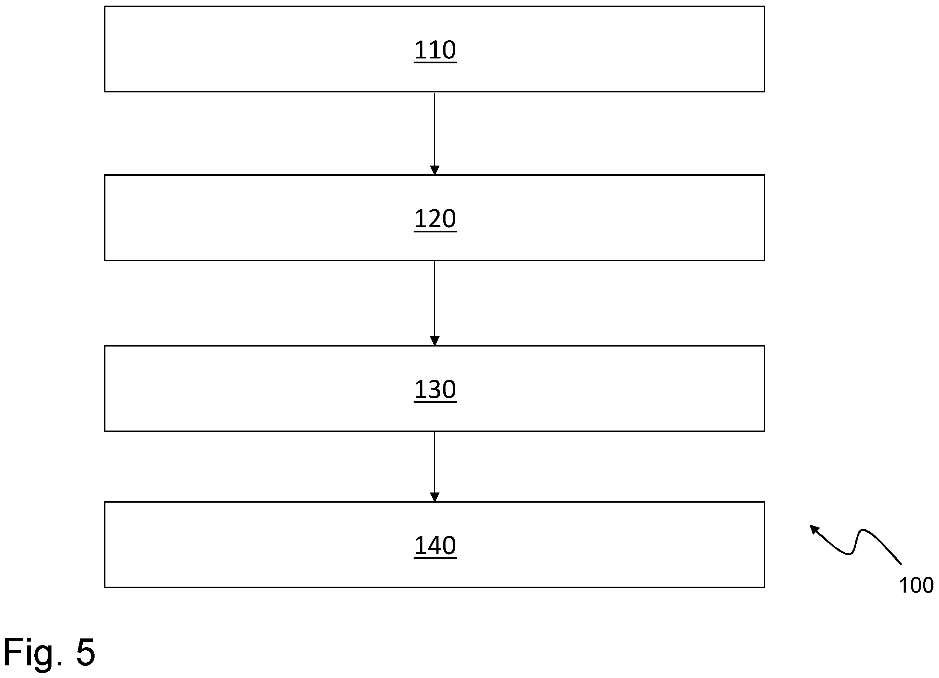

Die Fig. 1 zeigt eine schematische Perspektivansicht in Richtung von oben auf eine Ausführungsform eines erfindungsgemäßen Transportabschnittes 1 und verdeutlicht einzelne Schritte, wie sie bei diversen Ausführungsformen des erfindungsgemäßen Verfahrens 100 (vgl. Fig. 5) vorgesehen sein können.

Der Transportabschnitt 1 umfasst eine Transportvorrichtung 20, die beispielsweise durch ein umlaufend angetriebenes Transportband oder durch ein Mattenband ausgebildet sein kann und in den Figuren der vorliegenden Patentanmeldung lediglich schematisch dargestellt ist. Mit der Transportvorrichtung 20 können Artikel, die durch Getränkebehälter ausgebildet sind, entlang der Förderrichtung FR bewegt werden. Die Transportvorrichtung 1 steht mit der Steuer- und/oder Regeleinrichtung S in Verbindung, welche die Transportvorrichtung 1 zum Bewegen von Artikeln ansteuern kann.

Zwei Führungselemente 32 erstrecken sich bei dem Transportabschnitt 1 nach Fig. 1 entlang der Transportvorrichtung 20 und sind hierbei parallel zur Förderrichtung FR positioniert. Der relative Abstand der Führungselemente 32 und 32' ist hierbei derart gewählt, dass sich zwischen den Führungselementen 32 und 32' einzelne Getränkebehälter, Zusammenstellungen an Getränkebehältern oder Gebinde mit jeweils mehreren Getränkebehältern mit geringem Abstand zu den Führungselementen 32 und 32' bewegen können, ohne hierbei zwischen den Führungselementen 32 und 32' zu klemmen. Die Führungselemente 32 und 32' bilden jeweils ein entlang der Förderrichtung FR verlaufendes C-Profil aus.

In diesem C-Profil können Rollen oder weitere Mittel zum Verschleißschutz aufgenommen sein, an denen Getränkebehälter während ihres Transportes entlanggleiten können, ohne dass die Getränkebehälter hierbei beschädigt werden. Die Führungselemente 32 und 32' sind vorliegend lediglich abschnittsweise dargestellt und erstrecken sich entlang ihrer jeweiligen Längserstreckung über einen weiteren Weg in Förderrichtung FR über den in Fig. 1 gezeigten Abschnitt hinaus. Auch ist vorliegend lediglich eine Gasse G dargestellt, die mittels zweier Führungselemente 32 und 32' gebildet wird. In der Praxis können jedoch mehrere solcher Gassen G über mehrere Führungselemente 32 und 32' gebildet werden, die hierzu parallel zueinander und in Förderrichtung FR orientiert sind.

Über einen Transportabschnitt 1 entsprechend Fig. 1 können Getränkebehälter in Richtung einer weiteren Handhabung, wie beispielsweise einer Verpackungsmaschine oder Gruppiermaschine, bewegt werden. Da zur weiteren Verarbeitung von Getränkebehältern häufig erforderlich ist, dass die Getränkebehälter zu einem genauen Zeitpunkt eine nachgeordnete Handhabungsvorrichtung erreichen, wird in der Praxis eine Position von Getränkebehältern im Verlauf ihrer Bewegung entlang des Transportabschnittes 1 erfasst. Sofern der Steuer- und/oder Regeleinrichtung S die jeweilige Position bekannt ist, kann die Steuer- und/oder Regeleinrichtung S durch eine entsprechende Regelung einer Fördergeschwindigkeit der Transportvorrichtung 20 veranlassen, dass die jeweiligen Getränkebehälter zu einem vorgegebenen Zeitpunkt an eine nachgeordnete Handhabungsvorrichtung weitergereicht werden.

Der Transportabschnitt 1 dient somit einerseits dazu, einen Verbringungsweg zwischen unterschiedlichen Stationen einer Verpackungsstrecke zu überbrücken. Darüber hinaus kann mittels des Transportabschnittes 1 gewährleistet werden, dass Artikel bzw. Getränkebehälter eine dem Transportabschnitt 1 nachgeordnete Handhabungsvorrichtung zu einem festgelegten Zeitpunkt mit einer vorgegebenen Taktfrequenz erreichen. Informationen hierzu sind der Steuer- und/oder Regeleinrichtung S bekannt und wurden bereits seitens eines Benutzers auf der Steuer- und/oder Regeleinrichtung S hinterlegt.

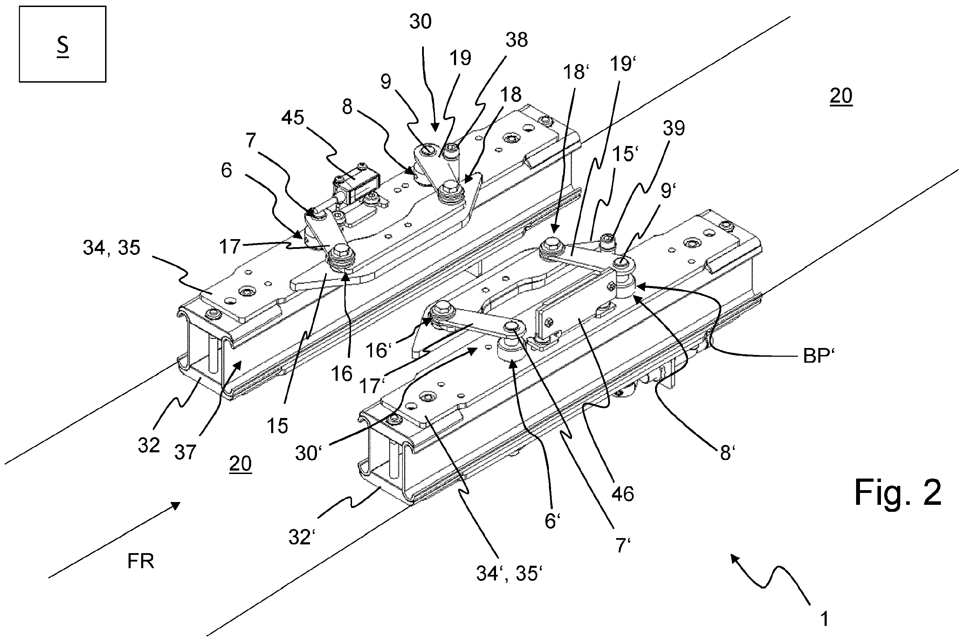

Bei dem Transportabschnitt 1 der Ausführungsform nach Fig. 1 ist zum Erfassen oder Erkennen einer Position von Getränkebehältern ein Kontaktelement 15 vorgesehen, welches sich in Fig. 1 in einer Warteposition befindet und hierbei in der Gasse G angeordnet ist, die vorhergehend bereits beschrieben wurde und zwischen den Führungselementen 32 und 32' ausgebildet wird. Die perspektivische Draufsicht auf den Transportabschnitt 1 nach Fig. 1 verdeutlicht hierbei, dass das Kontaktelement 15 in der Warteposition bereits unterhalb bzw. auf vertikal geringerem Höhenniveau als die Führungselemente 32 und 32' positioniert ist. Hierdurch können die Kontaktelemente 15 und 15' (vgl. Fig. 2) mit einer seitlichen Mantelfläche eines jeweiligen Getränkebehälters, welche sich nahe an einem Getränkebehälterboden befindet, in Kontakt treten, wenn Getränkebehälter über die Transportvorrichtung 20 in Förderrichtung FR bewegt werden und hierbei in Oberflächenkontakt mit den Kontaktelementen 15 und 15' gelangen.

Sowohl an dem Führungselement, welches in Fig. 1 auf Verweis mit Ziffer 32 dargestellt ist, als auch an dem weiteren Führungselement, welches in Fig. 1 auf Verweis mit Ziffer 32' dargestellt wird, ist jeweils ein Kontaktelement 15 bzw. 15' (vgl. Fig. 2) angeordnet. Um das Kontaktelement 15 in der Warteposition halten zu können, umfasst das Führungselement 32 des Transportabschnittes 1 zwei bei einer Zusammenschau der Fig. 1 mit Fig. 2 zu erkennende Stützen 35, die jeweils als Befestigungsplatte 34 ausgebildet sind und die jeweils zwei fluchtend zueinander orientierte Befestigungspositionen BP ausbilden. Auch das auf Verweis mit Ziffer 15' dargestellte Kontaktelement wird entsprechend gehalten, wobei zwei weitere parallel zueinander orientierte Stützen 35' vorgesehen sind, die jeweils als Befestigungsplatte 34' ausgebildet sind und jeweils zwei Befestigungspositionen BP' ausbilden.

Die Stützen 35 und 35' bzw. die Befestigungsplatten 34 und 34' sind vorliegend jeweils als Bestandteil eines Führungselementes 32 und 32' ausgebildet. Somit erstrecken sich die Stützen 35 und 35' bzw. die Befestigungsplatten 34 und 34' über einen bestimmten Abschnitt des jeweiligen Führungselementes 32 und 32' in Förderrichtung FR, ragen hierbei jedoch nicht in die jeweilige Gasse G hinein. Fig. 1 lässt auch erkennen, dass die Stützen 35 und 35' bzw. die Befestigungsplatten 34 und 34' auf einer der Gasse G abgewandten Seite des jeweiligen Führungselementes 32 bzw. 32' seitlich nicht über das jeweilige Führungselement 32 bzw. 32' hinausragen. Hierdurch besitzen die Führungselemente 32 und 32' einen sehr kompakten Aufbau und stellen zudem eine Möglichkeit zur Lagerung der Kontaktelemente 15 und 15' bereit.

Sofern ein Transportabschnitt 1 mehrere Gassen G umfasst und hierzu Führungselemente 32 und 32' unterschiedlicher Gassen nebeneinander angeordnet werden müssen, kann der Abstand zwischen diesen Führungselementen 32 und 32' sehr geringgehalten werden, da die Befestigungsplatten 34 und 34' seitlich nicht über das jeweilige Führungselemente 32 bzw. 32' hinausragen. Eine Lagerung für die Kontaktelemente 15 und 15', welche sich bei aus dem Stand der Technik bekannten Transportabschnitten auf einer der Gasse G abgewandten Seite eines jeweiligen Führungselementes 32 bzw. 32' befindet, ist bei dem Transportabschnitt 1 des Ausführungsbeispiels nach Figuren 1 bis 4 nicht vorgesehen.

An den Befestigungspositionen BP und BP', welche vorliegend durch die Befestigungsplatten 34 und 34' ausgebildet werden, ist jeweils ein Drehlager 6 bzw. 6' sowie 8 bzw. 8' angeordnet, mit welchen Drehlagern 6 bzw. 6' sowie 8 bzw. 8' jeweils ein Hebel 17, 19 sowie 17' und 19' in Verbindung steht. Die Hebel 17, 19 sowie 17' und 19' können über das jeweilige Drehlager 6 bzw. 6' sowie 8 bzw. 8' geschwenkt werden. Eine jeweilige Schwenkachse 7 und 9 bzw. 7' und 9' der Drehlager 6 bzw. 6' sowie 8 bzw. 8 ist vorliegend jeweils vertikal orientiert. Die Schwenkachsen 7 und 9 sowie 7' und 9' der Drehlager 6 und 6' sowie 8 und 8' verlaufen somit parallel zueinander. Figuren 1 und 2 lassen weiter erkennen, dass an einem dem jeweiligen Führungselement 32 bzw. 32' abgewandten Endbereich eines jeweiligen Hebels 17, 19 sowie 17' und 19' jeweils ein weiteres Drehlager 16 und 18 bzw. 16' und 18' angeordnet ist. Auch die Schwenkachsen dieser weiteren Drehlager 16 und 18 bzw. 16' und 18' sind vorliegend jeweils vertikal orientiert und verlaufen somit parallel zueinander.

Mit den weiteren Drehlagern 16 und 18 bzw. 16' und 18' stehen die Kontaktelemente 15 und 15' in Verbindung, so dass ein jeweiliges Kontaktelement 15 bzw. 15' um vertikal orientierte Schwenkachsen der jeweiligen weiteren Drehlager 16 und 18 bzw. 16' und 18' gedreht werden kann. Die Drehlager 6 und 6' sowie 8 und 8', die weiteren Drehlager 16 und 18 sowie 16' und 18' sowie die Hebel 17 und 19 bzw. 17' und 19' sind Bestandteil einer jeweiligen Verstellmechanik 30 bzw. 30' für ein jeweiliges Kontaktelement 15 bzw. 15'. Die Verstellmechaniken 30 und 30' arbeiten jeweils nach dem Prinzip einer Parallelogramm-Kinematik.

Über den Transportabschnitt 1 werden Getränkebehälter in Förderrichtung FR hintereinander bewegt, wobei aufeinanderfolgende Getränkebehälter hierbei in Förderrichtung FR beabstandet zueinander sind. Im Verlauf der Bewegung treten somit Getränkebehälter nacheinander mit den Kontaktelementen 15 und 15' in Oberflächenkontakt und bewegen das jeweilige Kontaktelement 15 bzw. 15' unter Oberflächenkontakt sodann relativ zur jeweiligen Befestigungsposition BP bzw. BP'.

Durch die Anordnung der Kontaktelemente 15 und 15' über die weiteren Drehlager 16 und 18 sowie 16' und 18' an den Hebeln 17 und 17' sowie 19 und 19' und durch die Anordnung der Hebel 17 und 17' sowie 19 und 19' an den Drehlagern 6 und 8 sowie 6' und 8' wird eine Zwangsführung für die Kontaktelemente 15 und 15' gebildet, über welche die Kontaktelemente 15 und 15' bei einem jeweiligen Versatz über einen jeweiligen Getränkebehälter geführt werden. Tritt ein jeweiliger Getränkebehälter mit einem jeweiligen Kontaktelement 15 bzw. 15' in Oberflächenkontakt, so versetzt der jeweilige Getränkebehälter hierauf das jeweilige Kontaktelement 15 bzw. 15' mit einer Richtungskomponente, welche der Förderrichtung FR der Transportvorrichtung 20 entspricht. Zeitlich überlagert versetzt ein jeweiliger Getränkebehälter das jeweilige Kontaktelemente 15 bzw. 15' mit einer weiteren Richtungskomponente, welche senkrecht zur Förderrichtung FR orientiert ist.

Die Bewegung des jeweiligen Kontaktelementes 15 bzw. 15' erfolgt somit schräg zur Förderrichtung FR und relativ zur jeweiligen Befestigungsposition BP bzw. BP', an welcher das jeweilige Kontaktelement 15 bzw. 15' angeordnet ist. Weiter erfolgt die Bewegung des jeweiligen Kontaktelementes 15 bzw. 15' bei einem jeweiligen Versatz in horizontaler Richtung, wobei das jeweilige Kontaktelement 15 bzw. 15' sein jeweiliges vertikales Höhenniveau beibehält bzw. während eines jeweiligen Versatzes weder angehoben noch abgesenkt wird.

Durch eine entsprechende Verstellmechanik 30 bzw. 30', welche nach dem Prinzip einer solchen Parallelogramm-Kinematik arbeitet, besteht darüber hinaus die Möglichkeit, dass das jeweilige Kontaktelement 15 bzw. 15' bei einem jeweiligen Versatz die zur Bewegung von Getränkebehältern zwischen den Führungselementen 32 gebildete Gasse vollständig verlassen kann und somit bei einem jeweiligen Versatz vollständig hinter eine seitliche Begrenzung 37 eines jeweiligen Führungselementes 32, welche seitliche Begrenzung 37 in Förderrichtung FR verläuft, vollständig zurücktritt. Somit kann es sein, dass ein jeweiliges Kontaktelement 15 bzw. 15' nach einem jeweiligen Versatz nicht mehr in eine jeweilige Gasse G hineinragt und zudem unterhalb eines jeweiligen Führungselementes 32 bzw. 32' angeordnet ist.

Die beschriebene Anordnung des Transportabschnittes 1 lässt in den Figuren 1 und 2 bereits erkennen, dass der Transportabschnitt 1 einen einfachen und kompakten Aufbau besitzt. So bilden die Stützen 35 der Führungselemente 32 die Befestigungspositionen BP und BP' aus. Die gesamte Lagerung der Kontaktelemente 15 und 15' ragt auf einer der Gasse G abgewandten Rückseite der Führungselemente 32 und 32' nicht über die Führungselemente 32 und 32' hinaus. Die Peripherie der Führungselemente 32 und 32', welche zugleich eine Möglichkeit zur Lagerung der Kontaktelemente 15 und 15' bereitstellen, wird durch die C-Profile und den hierin ggf. aufgenommenen Verschleißschutz vorgegeben.

Hierdurch besteht in der Praxis die Möglichkeit, eine Vielzahl an Gassen G durch mehrere Führungselemente 32 zu bilden, wobei unmittelbar benachbarte Führungselemente 32 bzw. 32' unterschiedlicher Gassen G hierbei mit Rückseiten aneinander anstehen können oder zumindest sehr nah aneinander angeordnet sein können. Bei aus dem Stand der Technik bereits bekannten Transportabschnitten ist, wie dies vorhergehend bereits erwähnt wurde, eine jeweilige Lagerung für die Kontaktelemente 15 und 15' auf einer der jeweiligen Gasse G abgewandten Rückseite von Führungselementen positioniert, so dass sich zwischen Führungselementen 32 und 32' unterschiedlicher Gassen G jeweils mindestens ein solches Lager befindet. Hierdurch können die Führungselemente 32 und 32' nicht nah aneinander positioniert werden, wodurch aus dem Stand der Technik bekannte Transportabschnitte häufig einen größeren Aufbau senkrecht zur Förderrichtung FR besitzen.

Um in der jeweiligen Gasse G über die Transportvorrichtung 20 geförderte Artikel erkennen zu können, stehen die Kontaktelemente 15 und 15' mit einem jeweiligen Sensor 40 bzw. 40' in Wirkverbindung. Die Sensoren 40 und 40' sind jeweils an einem Winkel 46 angeordnet, wobei die Winkel 46 mit einer jeweiligen Stütze 35 bzw. mit einem jeweiligen Führungselemente 32 bzw. 32' verschraubt sind. Über einen jeweiligen Versatz eines jeweiligen Kontaktelementes 15 bzw. 15' wird ein jeweiliger Sensor 40 bzw. 40' betätigt, wobei die Sensoren 40 und 40' mit der Steuer- und/oder Regeleinrichtung S in Verbindung stehen. Die Steuer- und/oder Regeleinrichtung S erhält somit Informationen bei einer Betätigung eines jeweiligen Sensors 40 bzw. 40'.

Die Drehlager 6 und 8 bzw. 6' und 8' bilden hierzu eine jeweilige Schwenkachse 7 und 9 bzw. 7' und 9' aus. An der Schwenkachse 9 bzw. 9' des jeweiligen Drehlagers 8 bzw. 8' ist eine jeweilige Nocke 12 bzw. 12' drehfest angeordnet. Wird ein jeweiliges Kontaktelement 15 bzw. 15' über einen jeweiligen Getränkebehälter versetzt, dann bewirkt ein solcher Versatz eine Drehbewegung der jeweiligen Schwenkachse 9 bzw. 9'. Die drehfest an der jeweiligen Schwenkachse 9 bzw. 9' angeordnete jeweilige Nocke 12 bzw. 12' wird zusammen mit der jeweiligen Schwenkachse 9 bzw. 9' rotierend bewegt und betätigt hierdurch den jeweiligen Sensor 40 bzw. 40'.

Da die Steuer- und/oder Regeleinrichtung S mit den Sensoren 40 und 40' in Verbindung steht, wird die Betätigung der Sensoren 40 und 40' von der Steuer- und/oder Regeleinrichtung S erkannt, woraufhin die Steuer- und/oder Regeleinrichtung S überprüft, ob die jeweilige Betätigung zu einem erwarteten Zeitpunkt erfolgt ist. Sofern der Zeitpunkt einer Betätigung nicht mit dem erwarteten Zeitpunkt übereinstimmt, wird von der Steuer- und/oder Regeleinrichtung S hierauf eine Transportgeschwindigkeit der Transportvorrichtung 20 derart angepasst bzw. geregelt, dass die jeweiligen Getränkebehälter eine nachfolgende Arbeitsstation oder Handhabungsvorrichtung zu einem vorgegebenen Zeitpunkt erreichen.

Die Sensoren 40 und 40' sind bei dem Ausführungsbeispiel nach Figuren 1 und 2 jeweils als induktive Sensoren 42 und 42' ausgebildet. Vorstellbar ist jedoch auch, dass für einen Transportabschnitt 1 entsprechend dem Ausführungsbeispiel nach Figuren 1 und 2 weitere Sensoren, wie beispielsweise Tastsensoren, Verwendung finden, um einen Versatz eines jeweiligen Kontaktelementes 15 bzw. 15' zu erkennen.

Die Fig. 2 zeigt eine schematische Perspektivansicht in Richtung von unten auf die Ausführungsform eines erfindungsgemäßen Transportabschnittes 1 nach Fig. 1 und verdeutlicht einzelne Schritte, wie sie bei diversen Ausführungsformen des erfindungsgemäßen Verfahrens 100 (vgl. Fig. 5) vorgesehen sein können. In Fig. 2 ist nochmals die Formgebung der Kontaktelemente 15 und 15' gut zu erkennen, welche Kontaktelemente 15 und 15' sich in Richtung ihrer freien Endbereiche jeweils verjüngen. Die Kontaktelemente 15 und 15' können jeweils durch Kunststoff ausgebildet sein.

Die Fig. 2 zeigt darüber hinaus, dass an den Befestigungsplatten 34 und 34' eine Lichtschranke 45 und ein Spiegel 46 angeordnet sind, welcher das Signal der Lichtschranke 45 reflektiert. Die Steuer- und/oder Regeleinrichtung S steht mit der Lichtschranke 45 in Verbindung und kann unter Berücksichtigung von Informationen, die über die Lichtschranke 45 bereitgestellt werden, überprüfen, ob ein jeweiliges Kontaktelement 15 bzw. 15' durch Getränkebehälter versetzt wurde oder ob ein jeweiliger Versatz durch eine unerwünschte Störung verursacht worden ist. Die Praxis hat hierbei insbesondere gezeigt, dass die Kontaktelemente 15 bzw. 15' nach einem jeweiligen Versatz beispielsweise durch Schrumpffolie klemmen können, so dass diese nicht in die gemäß Figuren 1 und 2 gezeigte Warteposition rücküberführt werden. Unter Zuhilfenahme der Lichtschranke 45 und des Spiegels 46 kann die Steuer- und/oder Regeleinrichtung S eine solche Störung erkennen und Informationen hierzu ggf. auf einer nicht mit dargestellten Anzeigeeinheit optisch ausgeben. Ein Benutzer kann sodann die jeweilige Störung beseitigen.

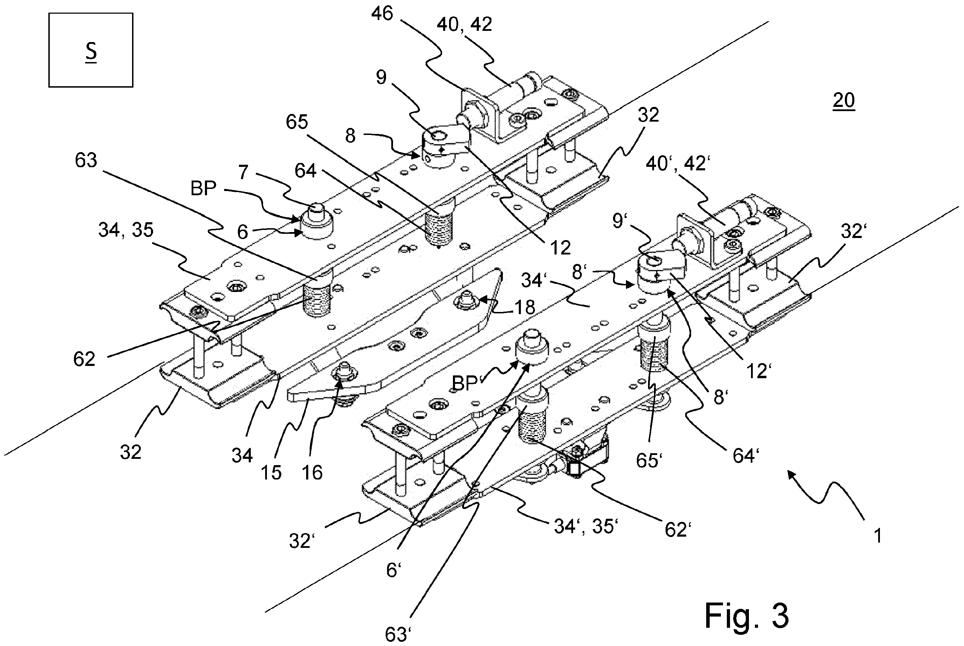

Die Fig. 3 zeigt eine weitere schematische Perspektivansicht in Richtung von oben auf die Ausführungsform des erfindungsgemäßen Transportabschnittes 1 nach Figuren 1 und 2 und verdeutlicht einzelne weitere Schritte, wie sie bei diversen Ausführungsformen des erfindungsgemäßen Verfahrens 100 (vgl. Fig. 5) vorgesehen sein können.

Entsprechend der vorherigen Beschreibung nach Figuren 1 und 2 sind auch in der Darstellung der Fig. 3 nochmals die zwei Führungselemente 32 und 32' zu erkennen, die parallel zueinander angeordnet sind und zwischen denen eine Gasse G für Getränkebehälter ausgebildet ist.

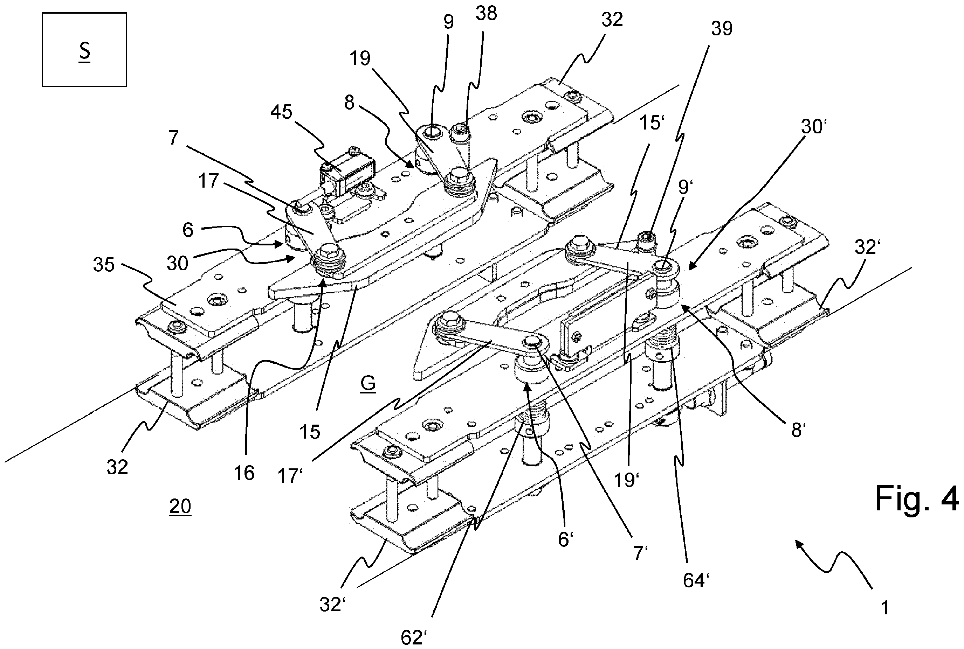

In den weiteren schematischen Perspektivdarstellungen entsprechend Figuren 3 und 4 ist vorliegend das C-Profil der Führungselemente 32 und 32' nicht mit dargestellt, welches C-Profil einen Verschleißschutz oder mehrere Rollen aufnehmen kann, die nach Möglichkeit einer Beschädigung von Getränkebehältern während einer Bewegung über die Transportvorrichtung 20 entgegenwirken sollen, sofern die Getränkebehälter hierbei mit dem Verschleißschutz oder den mehreren Rollen in Kontakt gelangen. Hierdurch lassen Figuren 3 und 4 nun weitere Komponenten der jeweiligen Verstellmechanik 30 bzw. 30' erkennen, welche in den Figuren 1 und 2 noch durch das C-Profil verdeckt sind.

Zu erkennen sind in den Figuren 3 und 4 mehrere Federn 62 und 64 bzw. 62' und 64'. Den Drehlagern 6 und 8 sowie 6' und 8' ist hierbei jeweils eine eigene Feder 62 und 64 bzw. 62' und 64' zugeordnet. Werden die Kontaktelemente 15 und 15' durch einen jeweiligen Getränkebehälter versetzt, so drehen sich hierbei die Schwenkachsen 7 und 9 bzw. 7' und 9', wodurch die Federn 62 und 64 bzw. 62' und 64' gespannt werden. Bei den Federn 62 und 64 bzw. 62' und 64' handelt es sich vorliegend jeweils um eine Torsionsfeder bzw. Drehfeder. Verliert ein jeweiliger Getränkebehälter nach Betätigung des jeweiligen Sensors 40 bzw. 40' seinen Oberflächenkontakt zum jeweiligen Kontaktelement 15 bzw. 15', so können die bereits gespannten Federn 62 und 64 bzw. 62' und 64' durch ihre Federkraft die Kontaktelemente 15 und 15' in eine Ausgangslage bzw. Warteposition zurückbewegen, wozu die Federn 62 und 64 bzw. 62' und 64' durch ihre Federkraft die Schwenkachsen 7 und 9 bzw. 7' und 9' drehen.

Die Figuren 2 und 4 lassen hierbei jeweils erkennen, dass die jeweilige Verstellmechanik 30 bzw. 30' über einen jeweiligen Anschlag 38 bzw. 39 verfügt. Die Ausgangsposition bzw. Warteposition wird für die Kontaktelemente 15 und 15' über die Anschläge 38 und 39 vorgegeben. Werden die Kontaktelemente 15 und 15' durch die Federkraft der Federn 62 und 64 bzw. 62' und 64' nach einer Betätigung des jeweiligen Sensors 40 bzw. 40' zurückbewegt, so treten die Hebel 19 und 19' mit den Anschlägen 38 und 39 in Kontakt und Begrenzen hierdurch die Verstellbewegung der Kontaktelemente 15 und 15'. Somit werden die Kontaktelemente 15 und 15' nach einer Betätigung eines jeweiligen Sensors 40 bzw. 40' sehr exakt in ihre jeweilige Ausgangsposition bzw. Warteposition rücküberführt, bis die Kontaktelemente 15 und 15' sodann erneut über einen Artikel oder über mehrere Artikel aus der Ausgangsposition bzw. Warteposition versetzt und die Sensoren 40 und 40' betätigt werden.

Die Fig. 4 zeigt eine schematische Perspektivansicht in Richtung von unten auf die Ausführungsform eines erfindungsgemäßen Transportabschnittes 1 nach Figuren 1 bis 3, wobei in Fig. 4 weiterhin das C-Profil nicht mit dargestellt wurde.

Eine Zusammenschau der Figuren 3 und 4 verdeutlicht hierbei, dass der Transportabschnitt 1 für jede Feder 62 und 64 bzw. 62' und 64' ein eigenes Spannrad 63 und 65 bzw. 63' und 65' besitzt. Über das jeweilige Spannrad 63 und 65 bzw. 63' und 65' kann eine Vorspannung der jeweiligen Feder 62 und 64 bzw. 62' und 64' händisch eingestellt werden. Hierzu wird das jeweilige Spannrad 63 und 65 bzw. 63' und 65' rotierend um die jeweilige Schwenkachse 7, 7' bzw. 9, 9' bewegt. Die rotierende Bewegung des jeweiligen Spannrades 63 und 65 bzw. 63' und 65' kann vorliegend händisch bzw. durch einen Benutzer vorgenommen werden. Getränkebehälter, welche mit den Kontaktelementen 15 und 15' in Anlage gelangen und das jeweilige Kontaktelement 15 und 15' versetzen, können eine unterschiedliche Masse besitzen. Die jeweilige Vorspannung der Federn 62 und 64 bzw. 62' und 64' ist hierbei auf die jeweilige Masse von Getränkebehältern abzustimmen, welche das jeweilige Kontaktelement 15 bzw. 15' versetzen sollen. Durch Federn 62 und 64 bzw. 62' und 64' und durch eine Einstellung ihrer jeweiligen Vorspannung mittels Spannrädern 63 und 65 bzw. 63' und 65' kann die jeweilige Vorspannung auf einfache Art und Weise auf entlang des Transportabschnittes 1 zu bewegende Getränkebehälter mit unterschiedlicher Masse abgestimmt werden.

Die Fig. 5 zeigt im Flussdiagramm einzelne Schritte einer Ausführungsform eines erfindungsgemäßen Verfahrens 100.

Im ersten Verfahrensschritt 110 werden Getränkebehälter in einer Gasse G gefördert, welche zwischen zwei Führungselementen 32 und 32' ausgebildet ist, wobei im Rahmen der Förderung ein Getränkebehälter mit einem Kontaktelement 15 bzw. 15' in Oberflächenkontakt gelangt. Die Förderung erfolgt über eine Transportvorrichtung 20, welche die Getränkebehälter entlang einer Förderrichtung FR in der Gasse bewegt.

Im zweiten Verfahrensschritt 120 versetzt ein Getränkebehälter oder mehrere Getränkebehälter das jeweilige Kontaktelement 15 bzw. 15' unter Oberflächenkontakt aus einer Warteposition in eine Arbeitsposition. Hierbei wird ein jeweiliges Kontaktelement 15 bzw. 15' über eine jeweilige Verstellmechanik 30 bzw. 30' mit einer Richtungskomponente geführt, entlang welcher Richtungskomponente die Getränkebehälter über die Transportvorrichtung 20 in der Gasse G gefördert werden. Die Richtungskomponente entspricht hierbei der Förderrichtung FR, entlang welcher die Transportvorrichtung 20 Artikel in der jeweiligen Gasse bewegt. Somit wird das jeweilige Kontaktelement 15 bzw. 15' bei einem jeweiligen Versatz temporär in Förderrichtung FR zusammen mit den Getränkebehältern mitbewegt. Gleichzeitig werden durch den Versatz des jeweiligen Kontaktelementes 15 bzw. 15' Federn 62 und 64 bzw. 62' und 64' gespannt, die als Bestandteil einer jeweiligen Verstellmechanik 30 bzw. 30' ausgebildet sind.

Wurde das Kontaktelement 15 bzw. 15' vollständig versetzt, so befindet sich das Kontaktelement 15 bzw. 15' sodann in einer Arbeitsposition. In dieser Arbeitsposition betätigt das Kontaktelement 15 bzw. 15' einen Sensor 40 bzw. 40', welcher mit einer Steuer- und/oder Regeleinrichtung S in Verbindung steht (Schritt 130). Die Steuer- und/oder Regeleinrichtung S kann hieraus Informationen zur jeweiligen Position der Getränkebehälter ableiten und eine Transportgeschwindigkeit der Transportvorrichtung 20 regeln, so dass der jeweilige Getränkebehälter eine dem Transportabschnitt 1 nachgeordnete Arbeitsstation zu einem vorgegebenen Zeitpunkt erreicht.

Nach einer Betätigung des jeweiligen Sensors 40 bzw. 40' verliert der jeweilige Getränkebehälter seinen Oberflächenkontakt zum jeweiligen Kontaktelement 15 bzw. 15'. Die bis dahin noch immer gespannten Federn 62 und 64 bzw. 62' und 64' bewegen sodann im vierten Schritt 140 des hier beschriebenen Verfahrens 100 das jeweilige Kontaktelement 15 bzw. 15' in eine Ausgangsposition bzw. Warteposition zurück, bis erneut ein weiterer Getränkebehälter oder mehrere weitere Getränkebehälter mit dem jeweiligen Kontaktelement 15 bzw. 15' in Oberflächenkontakt gelangen und das jeweilige Kontaktelement 15 bzw. 15' sodann zur Betätigung eines jeweiligen Sensors 40 bzw. 40' erneut versetzen.

Wenn auch im Zusammenhang der zuvor im Detail erläuterten Figuren generell von "schematischen" Darstellungen und Ansichten die Rede ist, so ist damit keineswegs gemeint, dass die Figurendarstellungen und deren Beschreibung hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen in irgendeiner Weise in seinem Verständnis beeinträchtigt wäre. Die Figuren ermöglichen es dem Fachmann als Leser somit, anhand der konkreter erläuterten Umsetzungen des erfindungsgemäßen Verfahrens 100 und der konkreter erläuterten Funktionsweise des erfindungsgemäßen Transportabschnittes 1 ein besseres Verständnis für den in den Ansprüchen sowie im allgemeinen Teil der Beschreibung allgemeiner und/oder abstrakter formulierten Erfindungsgedanken abzuleiten.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

1 Transportabschnitt
6 Drehlager
6' Drehlager
7 Schwenkachse
7' Schwenkachse
8 Drehlager
8' Drehlager
9 Schwenkachse
9' Schwenkachse
12 Nocke
12' Nocke
15 Kontaktelement
15' Kontaktelement
16 Weiteres Drehlager
16' Weiteres Drehlager
17 Hebel
17' Hebel
18 Weiteres Drehlager
18' Weiteres Drehlager
19 Hebel
19' Hebel
20 Transportvorrichtung
30 Verstellmechanismus
30' Verstellmechanismus
32 Führungselement
32' Führungselement
34 Befestigungsplatte
34' Befestigungsplatte
35 Stütze
35' Stütze
37 Seitliche Begrenzung
38 Anschlag
39 Anschlag
40 Sensor
40' Sensor
42 Induktiver Sensor
42' Induktiver Sensor
46 Winkel
62 Feder
62' Feder
63 Spannrad
63' Spannrad
64 Feder
64' Feder
65 Spannrad
65' Spannrad
100 Verfahren
110 erster Verfahrensschritt
120 zweiter Verfahrensschritt
130 dritter Verfahrensschritt
140 vierter Verfahrensschritt
BP Befestigungsposition
BP' Befestigungsposition
FR Förderrichtung
G Gasse

## Patentansprüche

1. Transportabschnitt (1) für Artikel wie Getränkebehälter oder dergleichen, mit
- einer Transportvorrichtung (20) und mit
- mindestens einem Führungselement (32, 32'), unter Zuhilfenahme welchen mindestens einen Führungselementes (32, 32') wenigstens eine Gasse (G) gebildet ist, in welcher wenigstens einen Gasse (G) eine Vielzahl an Artikeln über die Transportvorrichtung (20) förderbar ist sowie umfassend
- mindestens ein Kontaktelement (15, 15'), eine Verstellmechanik (30, 30'), wenigstens eine Stütze (35, 35') und wenigstens einen Sensor (40, 40'), wobei das mindestens eine Kontaktelement (15, 15') über die Verstellmechanik (30, 30') an wenigstens einer vorgegebenen Befestigungsposition (BP, BP') der wenigstens einen Stütze (35, 35') gelagert ist und über in der wenigstens einen Gasse (G) bewegte Artikel aus einer Warteposition, in welcher das mindestens eine Kontaktelement (15, 15') zumindest abschnittsweise in die wenigstens eine Gasse (G) hineinragt, in eine Arbeitsposition, bei welcher der wenigstens eine Sensor (40, 40') betätigt ist, versetzt werden kann, der Transportabschnitt (1) **dadurch gekennzeichnet, dass**
- das mindestens eine Kontaktelement (15, 15') über die Verstellmechanik (30, 30') derart geführt ist, dass das mindestens eine Kontaktelement (15, 15') bei einem jeweiligen Versatz seinen relativen Abstand gegenüber der wenigstens einen Befestigungsposition (BP, BP') verändert und/oder wobei vorgesehen ist, dass
- die Verstellmechanik (30, 30') zum Führen des mindestens einen Kontaktelementes (15, 15') bei einem jeweiligen Versatz mit einer Richtungskomponente ausgebildet ist, welche Richtungskomponente einer Förderrichtung (FR) der Transportvorrichtung (20) entspricht.

2. Transportabschnitt nach Anspruch 1, bei welchem das mindestens eine Kontaktelement (15, 15') über die Verstellmechanik (30, 30') derart geführt ist, dass das mindestens eine Kontaktelement (15, 15') bei einem jeweiligen Versatz senkrecht zu einer Förderrichtung (FR) der Transportvorrichtung (20) wenigstens abschnittsweise oder sogar zumindest näherungsweise vollständig hinter eine entlang der Förderrichtung (FR) verlaufende seitliche Begrenzung (37) des mindestens einen Führungselementes (32, 32') zurücktritt.

3. Transportabschnitt nach Anspruch 1 oder Anspruch 2, bei welchem das mindestens eine Kontaktelement (15, 15') über die Verstellmechanik (30, 30') derart geführt ist, dass sich das mindestens eine wenigstens abschnittsweise oder sogar zumindest näherungsweise vollständig hinter die entlang der Förderrichtung (FR) verlaufende seitliche Begrenzung (37) des mindestens einen Führungselementes (32, 32') zurückgetretene Kontaktelement (15, 15') in vertikaler Richtung unterhalb des mindestens einen Führungselementes (32, 32') befindet.

4. Transportabschnitt nach einem der Ansprüche 1 bis 3, bei welchem die Verstellmechanik (30, 30') mindestens eine Feder (62, 62', 64, 64') umfasst, welche durch einen Versatz des mindestens einen Kontaktelementes (15, 15') aus der Warteposition in die Arbeitsposition spannbar ist, wobei über eine Federkraft der mindestens einen gespannten Feder (62, 62', 64, 64') das mindestens eine Kontaktelement (15, 15') aus der Arbeitsposition in die Warteposition zurückbewegbar ist.

5. Transportabschnitt nach Anspruch 4, bei welchem eine Vorspannung der mindestens einen Feder (62, 62', 64, 64') einstellbar ist.

6. Transportabschnitt nach Anspruch 5, umfassend mindestens ein Spannrad (63, 63', 65, 65'), über dessen Drehbewegung eine Vorspannung der mindestens einen Feder (62, 62', 64, 64') einstellbar ist.

7. Transportabschnitt nach einem der Ansprüche 1 bis 6, bei welchem die für ein jeweiliges Kontaktelement (15, 15') vorgesehene Verstellmechanik (30, 30') mindestens ein Drehlager (6, 6', 8, 8'), wenigstens einen Hebel (17, 17', 19, 19') und wenigstens ein weiteres Drehlager (16, 16', 18, 18') umfasst, wobei der wenigstens eine Hebel (17, 17', 19, 19') über das mindestens eine Drehlager (6, 6', 8, 8') an der wenigstens einen vorgegebenen Befestigungsposition (BP, BP') einer zugeordneten Stütze (35, 35') gelagert ist und wobei das jeweilige Kontaktelement (15, 15') über das wenigstens eine weitere Drehlager (16, 16', 18, 18') am wenigstens einen Hebel (17, 17', 19, 19') angeordnet ist.

8. Transportabschnitt nach Anspruch 7, bei welchem die für ein jeweiliges Kontaktelement (15, 15') vorgesehene Verstellmechanik (30, 30') mindestens zwei Drehlager (6, 6', 8, 8'), wenigstens zwei Hebel (17, 17', 19, 19') und wenigstens zwei weitere Drehlager (16, 16', 18, 18') umfasst, wobei
- über ein jeweiliges Drehlager (6, 6', 8, 8') der mindestens zwei Drehlager (6, 6', 8, 8') ein jeweiliger Hebel (17, 17', 19, 19') der wenigstens zwei Hebel (17, 17', 19, 19') an einer jeweiligen Befestigungsposition (BP, BP') einer zugeordneten Stütze (35) gelagert ist und wobei
- das jeweilige Kontaktelement (15, 15') über die wenigstens zwei weiteren Drehlager (16, 16', 18, 18') an einem jeweiligen Hebel (17, 17', 19, 19') der wenigstens zwei Hebel (17, 17', 19, 19') angeordnet ist.

9. Transportabschnitt nach einem der Ansprüche 1 bis 7 mit wenigstens zwei parallel zueinander verlaufenden Gassen (G), wobei
- ein bestimmtes Führungselement (32, 32') des mindestens einen Führungselementes (32, 32) jeweils eine seitliche Begrenzung (37) für die wenigstens zwei parallel zueinander verlaufenden Gassen (G) ausbildet und/oder wobei
- ein zum Bilden einer ersten Gasse (G) vorgesehenes Führungselement (32, 32') und ein zum Bilden einer zweiten Gasse (G) vorgesehenes Führungselement (32, 32') aneinander anstehen oder sich in einem Nahbereich zueinander befinden.

10. Verfahren (100) zum sensorischen Erkennen von Artikeln, bei welchem Verfahren eine Vielzahl an Artikeln über eine Transportvorrichtung (20) in wenigstens einer Gasse (G) gefördert wird und im Rahmen der Förderung Artikel nacheinander mindestens ein im Bereich der wenigstens einen Gasse (G) angeordnetes Kontaktelement (15, 15') versetzen, welches mindestens eine Kontaktelement (15, 15') über eine Verstellmechanik (30, 30') an wenigstens einer vorgegebenen Befestigungsposition (BP, BP') wenigstens einer Stütze (35, 35') gelagert ist, wobei aus einem jeweiligen Versatz des mindestens einen Kontaktelementes (15, 15') resultierend wenigstens ein Sensor (40, 40') betätigt wird, das Verfahren **dadurch gekennzeichnet, dass**
- das mindestens eine Kontaktelement (15, 15') über die Verstellmechanik (30, 30') derart geführt wird, dass das mindestens eine Kontaktelement (15, 15') bei einem jeweiligen Versatz seinen relativen Abstand gegenüber der wenigstens einen vorgegebenen Befestigungsposition (BP, BP') verändert, und/oder bei welchem Verfahren
- das mindestens eine Kontaktelement (15, 15') über die Verstellmechanik (30, 30') bei einem jeweiligen Versatz mit einer Richtungskomponente geführt wird, entlang welcher Richtungskomponente die Vielzahl an Artikeln über die Transportvorrichtung (20) in der wenigstens einen Gasse (G) gefördert wird.

11. Verfahren nach Anspruch 10, bei welchem die wenigstens eine Gasse (G) unter Zuhilfenahme mindestens eines entlang einer Förderrichtung (FR) der Transportvorrichtung (20) verlaufenden Führungselementes (32, 32') gebildet wird und bei welchem Verfahren das mindestens eine Kontaktelement (15, 15') über die Verstellmechanik (30, 30') derart geführt wird, dass das mindestens eine Kontaktelement (15, 15') bei einem jeweiligen Versatz senkrecht zur Förderrichtung (FR) der Transportvorrichtung (20) wenigstens abschnittsweise oder sogar zumindest näherungsweise vollständig hinter eine entlang der Förderrichtung (FR) verlaufende seitliche Begrenzung (37) des mindestens einen Führungselementes (32, 32') zurücktritt.

12. Verfahren nach Anspruch 11, bei welchem das mindestens eine Kontaktelement (15, 15') über die Verstellmechanik (30, 30') derart geführt wird, dass sich das mindestens eine wenigstens abschnittsweise oder sogar zumindest näherungsweise vollständig hinter die entlang der Förderrichtung (FR) verlaufende seitliche Begrenzung (37) des mindestens einen Führungselementes (32, 32') zurückgetretene Kontaktelement (15, 15') in vertikaler Richtung unterhalb des mindestens einen Führungselementes (32, 32') befindet.

13. Verfahren nach einem der Ansprüche 10 bis 12, bei welchem die Verstellmechanik (30, 30') mindestens eine Feder (62, 62', 64, 64') umfasst, welche mindestens eine Feder (62, 62', 64, 64') bei einem jeweiligen Versatz des mindestens einen Kontaktelementes (15, 15') gespannt wird und welche mindestens eine sodann gespannte Feder (62, 62', 64, 64') mittels ihrer Federkraft das mindestens eine Kontaktelement (15, 15') nach einer Betätigung des wenigstens einen Sensors (40, 40') in eine Ausgangslage zurückbewegt.

14. Verfahren nach Anspruch 13, bei welchem eine Vorspannung der mindestens einen Feder (62, 62', 64, 64') eingestellt wird.

15. Verfahren nach Anspruch 14, bei welchem eine Vorspannung der mindestens einen Feder (62, 62', 64, 64') über wenigstens ein der mindestens einen Feder (62, 63', 64, 64') zugeordnetes Spannrad (63, 63', 65, 65') eingestellt wird, welches hierzu drehend bewegt wird.

16. Verfahren nach einem der Ansprüche 10 bis 15, bei welchem die für ein jeweiliges Kontaktelement (15, 15') vorgesehene Vestellmechanik (30, 30') mindestens ein Drehlager (6, 6', 8, 8'), wenigstens einen Hebel (17, 17', 19, 19') und wenigstens ein weiteres Drehlager (16, 16', 18, 18') umfasst, wobei der wenigstens eine Hebel (17, 17', 19, 19') über das mindestens eine Drehlager (6, 6', 8, 8') an der wenigstens einen vorgegebenen Befestigungsposition (BP, BP') einer zugeordneten Stütze (35, 35') gelagert ist und wobei das jeweilige Kontaktelement (15, 15') über das wenigstens eine weitere Drehlager (16, 16', 18, 18') am wenigstens einen Hebel (17, 17', 19, 19') angeordnet ist und bei welchem Verfahren vorgesehen ist, dass
- bei einem jeweiligen Versatz der wenigstens eine Hebel (17, 17', 19, 19') um mindestens eine Schwenkachse (7, 9, 7', 9') des mindestens einen Drehlagers (6, 6', 8, 8') geschwenkt wird und das mindestens eine Kontaktelement (15, 15') hierbei zeitlich überlagert um wenigstens eine weitere Schwenkachse des wenigstens einen weiteren Drehlagers (16, 16', 18, 18') geschwenkt wird.
